# EUROPEAN PATENT APPLICATION

(11) **EP 2 111 910 A1**
(43) Date of publication of application: **28.10.2009**
(21) Application number: 08155118.6
(22) Date of filing: 24.04.2008
(51) Int. Cl.: B01D 69/12, B01D 71/26

(54) **System And Process For Producing A Multilayer Microporous Membrane**

(71) Applicant: Tonen Chemical Corporation, Tokyo 108-8005 (JP)
(72) Inventor: The designation of the inventor has not yet been filed
(74) Representative: Veldhuizen, Albert Dirk Willem

(57) **Abstract**

A process for producing a multilayer microporous membrane. The process includes the steps of combining a first polyolefin composition and a solvent or diluent to prepare a first polyolefin solution, the polyolefin composition comprising at least a first polyethylene having a crystal dispersion temperature (T_{cd}) and polypropylene, combining a second polyolefin composition and a solvent to prepare a second polyolefin solution, the second polyolefin composition comprising at least a first polyethylene having a crystal dispersion temperature (T_{cd}) and polypropylene, extruding the first polyolefin solution and the second polyolefin solution to form a first extrudate and a second extrudate, cooling each extrudate to form a first cooled extrudate and a second cooled extrudate, orienting each cooled extrudate in at least a first direction by about one to about ten fold at a temperature of about T_{cd} +/- 15° C.. and further orienting each cooled extrudate in at least a second direction by about one to about five fold at a temperature about 10° C. to about 40° C. higher than the temperature employed in the first orienting step. A process and system for reducing transverse direction film thickness fluctuation in a cocxtrudcd multilayer film or sheet produced from a polyolefin solution is also provided.

## Description

### FIELD OF THE INVENTION

This disclosure relates generally to a system and method for producing a microporous membrane having excellent properties, including high meltdown temperature, good surface smoothness and good electrochemical stability, as well as high permeability, high strength and low heat shrinkage, when used as a battery separator.

### BACKGROUND OF THE INVENTION

Microporous polyolefin membranes are useful as separators for primary batteries and secondary batteries such as lithium ion secondary batteries, lithium-polymer secondary batteries, nickel-hydrogen secondary batteries, nickel-cadmium secondary batteries, nickel-zinc secondary batteries, silver-zinc secondary batteries, etc. When the microporous polyolefin membrane is used as a battery separator, particularly as a lithium ion battery separator, the membrane's performance significantly affects the properties, productivity and safety of the battery. Accordingly, the microporous polyolefin membrane should have suitably well-balanced permeability, mechanical properties, dimensional stability, shutdown properties, meltdown properties, etc. The term "well-balanced" means that the optimization of one of these characteristics does not result in a significant degradation in another.

As is known, it is desirable for the batteries to have a relatively low shutdown temperature and a relatively high meltdown temperature for improved battery safety, particularly for batteries exposed to high temperatures under operating conditions. Consistent dimensional properties, such as film thickness, are essential to high performing films. A separator with high mechanical strength is desirable for improved battery assembly and fabrication, and for improved durability. The optimization of material compositions, casting and stretching conditions, heat treatment conditions, etc. have been proposed to improve the properties of microporous polyolefin membranes.

In general, microporous polyolefin membranes consisting essentially of polyethylene (i.e., they contain polyethylene only with no significant presence of other species) have relatively low meltdown temperatures. Accordingly, proposals have been made to provide microporous polyolefin membranes made from mixed resins of polyethylene and polypropylene, and multilayer, microporous polyolefin membranes having polyethylene layers and polypropylene layers in order to increase meltdown temperature. The use of these mixed resins can make the production of films having consistent dimensional properties, such as film thickness, all the more difficult.

Many advantages are achieved by the production of multiple layer constructions of thin films as this construction enables a combination of properties not available in a monolayer structure. Originally, such products were prepared principally by laminating separately formed films or sheets together by adhesives, heat or pressure.

Techniques have been developed for melt laminating which involves joining two or more diverse materials (e.g., thermoplastic materials) from separate molten layers under pressure within a die to emerge as a single laminated material. Such processes make use of the laminar flow principle which enables two or more molten layers under proper operating conditions to join in a common flow channel without intermixing at the contacting interfaces. These multiple layer extrusion systems have come into use as a convenient way to provide for the formation of multiple layers of similar or dissimilar materials.

U.S. Patent No. 4,734,196 proposes a microporous membrane of ultra-high-molecular-weight alpha-olefin polymer having a weight-average molecular weight greater than 5x10⁵, the microporous membrane having through holes 0.01 to 1 micrometer in average pore size, with a void ratio from 30 to 90% and being oriented such that the linear draw ratio in one axis is greater than two and the linear draw ratio is greater than ten. The microporous membrane is obtained by forming a gel-like object from a solution of an alpha-olefin polymer having a weight-average molecular weight greater than 5x10⁵, removing at least 10 wt % of the solvent contained in the gel-like object so that the gel-like object contains 10 to 90 wt % of alpha-olefin polymer, orientating the gel-like object at a temperature lower than that which is 10° C. above the melting point of the alpha-olefin polymer, and removing the residual solvent from the orientated product. A film is produced from the orientated product by pressing the orientated product at a temperature lower than that of the melting point of the alpha-olefin polymer.

U.S. Patent Publication No. 2007/0012617 proposes a method for producing a microporous thermoplastic resin membrane comprising the steps of extruding a solution obtained by melt-blending a thermoplastic resin and a membrane-forming solvent through a die, cooling an extrudate to form a gel-like molding, removing the membrane-forming solvent from the gel-like molding by a washing solvent, and removing the washing solvent, the washing solvent having (a) a surface tension of 24 mN/m or less at a temperature of 25°C., (b) a boiling point of 100°C. or lower at the atmospheric pressure, and (c) a solubility of 600 ppm (on a mass basis) or less in water at a temperature of 16°C.; and the washing solvent remaining in the washed molding being removed by using warm water. The molten polymer is fed into a first inlet at an end of a first manifold and a second inlet at the end of a second manifold on the opposite side of the first inlet. Two slit currents flow together inside the die. It is theorized that due to the absence of flow divergence of the melt inside the manifold, it may be possible to achieve uniform flow distribution within the die. This is said to result in improved thickness uniformity in the transverse direction the film or the sheet.

JP Publication No. 2004-083866 proposes a method for producing a polyolefin microporous film that includes preparing a gel-like molded product by melting and kneading the polyolefin with a liquid solvent, extruding the molten and kneaded product from a die, simultaneously and biaxially drawing in the machine and vertical directions, subsequently drawing at a higher temperature than that of the simultaneous biaxial drawing to increase anisotropy against the primary drawing. The redrawing is carried out to satisfy both relations: 0<λ1t/λ2m≤ 10, wherein λ1t denotes a draw ratio of the biaxial drawing in the vertical direction and λ2m denotes a draw ratio of the redrawing in the machine direction, and 0<λ1m/λ2t≤10, wherein λ1m denotes a draw ratio of the biaxial drawing in the machine direction and λ2t denotes a draw ratio of the redrawing in the vertical direction.

WO 2004/089627 discloses a microporous polyolefin membrane made of polyethylene and polypropylene comprising two or more layers, the polypropylene content being more than 50% and 95% or less by mass in at least one surface layer, and the polyethylene content being 50 to 95% by mass in the entire membrane.

WO 2005/113657 discloses a microporous polyolefin membrane having conventional shutdown properties, meltdown properties, dimensional stability and high-temperature strength. The membrane is made using a polyolefin composition comprising (a) composition comprising lower molecular weight polyethylene and higher molecular weight polyethylene, and (b) polypropylene. This microporous polyolefin membrane is produced by a so-called "wet process".

Despite these advances in the art, there remains a need for system and process capable of producing coextruded multilayer microporous polyolefin membranes and other high quality films or sheets.

### SUMMARY OF THE INVENTION

Provided is a process for producing a multilayer microporous membrane. The process includes the steps of combining a first polyolefin composition and a solvent or diluent to form a first polyolefin solution, the first polyolefin composition comprising at least a first polyethylene having a crystal dispersion temperature (T_{cd}) and polypropylene, combining a second polyolefin composition and a solvent to form a second polyolefin solution, the second polyolefin composition comprising at least a first polyethylene having a crystal dispersion temperature (T_{cd}) and optionally polypropylene, extruding the first polyolefin solution and the second polyolefin solution to form a first extrudate and a second extrudate, cooling each extrudate to form a first cooled extrudate and a second cooled extrudate, orienting each cooled extrudate in at least a first direction by about one to about ten fold at a temperature of about T_{cd} +/- 15° C. and further orienting each cooled coextrudate in at least a second direction by about one to about five fold at a temperature about 10° C. to about 40° C. higher than the temperature employed in the first orienting step. In an embodiment, the first polyolefin composition produces the skin layers of the microporous membrane and the second polyolefin composition produces the core layer according to the process. In this embodiment, using polyethylene and polypropylene in the skin layers results in a membrane that when used as a separator in a lithium ion secondary battery improves the battery's recovery ratio and melt down temperature. The use of polypropylene in the core layer is optional.

In one form, the process further includes the steps of removing at least a portion of the solvent from each cooled extrudate to form a first membrane and a second membrane, optionally orienting each membrane to a magnification of from about 1.1 to about 2.5 fold in at least one direction; and heat-setting each membrane.

In another form, the first cooled extrudate is laminated to the second cooled extrudate at any step following the cooling step.

In yet another form, the step of extruding the first polyolefin solution and the second polyolefin solution utilizes a coextrusion die to form a coextrudate.

In another aspect, a process for reducing transverse direction film thickness fluctuation in a multilayer film or sheet produced from a first polyolefin solution and a second polyolefin solution is provided, the first and second polyolefin solutions each comprising at least a first polyethylene having a crystal dispersion temperature (T_{cd}), and a solvent or diluent. The first polyolefin solution also comprises polypropylene. Optionally, the second polyolefin solution further comprises polypropylene. The process includes the steps of extruding the first polyolefin solution and the second polyolefin solution to form a first extrudate and a second extrudate, cooling each extrudate to form a first cooled extrudate and a second cooled extrudate, orienting each cooled extrudate in at least a first direction by about one to about ten fold at a temperature of about T_{cd} +/- 15° C. and further orienting each cooled extrudate in at least a second direction by about one to about five fold at a temperature about 10° C. to about 40° C. higher than the temperature employed in the first orienting step.

In yet another aspect, a system for reducing transverse direction film thickness fluctuation in a multilayer film or sheet produced from a first polyolefin solution and a second polyolefin solution is provided. The system includes a first extruder for preparing the first polyolefin solution, a second extruder for preparing the second polyolefin solution, at least one extrusion die for receiving and extruding the first polyolefin solution and the second polyolefin solution, means for cooling each extrudate, a first stretching machine for orienting each cooled coextrudate in at least a first direction by about one to about ten fold at a temperature of about T_{cd} +/- 15° C. and a second stretching machine for further orienting each cooled coextrudate in at least a second direction by about one to about five fold at a temperature about 10° C. to about 40° C. higher than the temperature employed by said first stretching machine, and a controller for regulating the temperature of the first stretching machine and the temperature of the second stretching machine, wherein the transverse direction film thickness fluctuation of a film or sheet produce by the system is reduced by at least 25%.

In one form, the first stretching machine is a roll-type stretching machine.

In another form, the first stretching machine is a tenter-type stretching machine.

In yet another form, the second stretching machine is a tenter-type stretching.

In still yet another form, the first polyolefin composition comprises polyethylene. In another form, the first polyolefin composition comprises at least about 30 wt. % high density polyethylene and at least about 30 wt. % polypropylene. The first and second polyolefin composition are independently selected. In one form, the second polyolefin composition comprises polyethylene. In another form, the second polyolefin composition comprises at least about 30 wt. % high density polyethylene and at least about 30 wt. % polypropylene. In one form, the first polyolefin solution comprise 10 wt% (based on the weight of the first polyolefin solution) or more of a first solvent or diluent with the balance being the first polyolefin composition. The second polyolefin solution comprise 10 wt% (based on the weight of the first polyolefin solution) or more of a second solvent or diluent with the balance being the second polyolefin composition.

In a further form, the first and second polyolefin compositions independently comprise at least about 30 wt. % high density polyethylene, at least about 30 wt. % polypropylene and at least about 20 wt. % ultra high molecular weight polyethylene.

In a yet further form, permeability fluctuation in a film or sheet can also be reduced by the system and process disclosed herein

These and other advantages, features and attributes of the disclosed processes and systems and their advantageous applications and/or uses will be apparent from the detailed description that follows, particularly when read in conjunction with the figures appended hereto.

### BRIEF DESCRIPTION OF THE DRAWINGS

FIG. 1 is a schematic view of one embodiment of a system for producing a sequential biaxially oriented coextruded multilayer film or sheet of thermoplastic material, in accordance herewith; and

FIG. 2 is a schematic view of another embodiment of a system for producing a sequential biaxially oriented coextruded multilayer film or sheet of thermoplastic material, in accordance herewith.

### DETAILED DESCRIPTION OF THE INVENTION

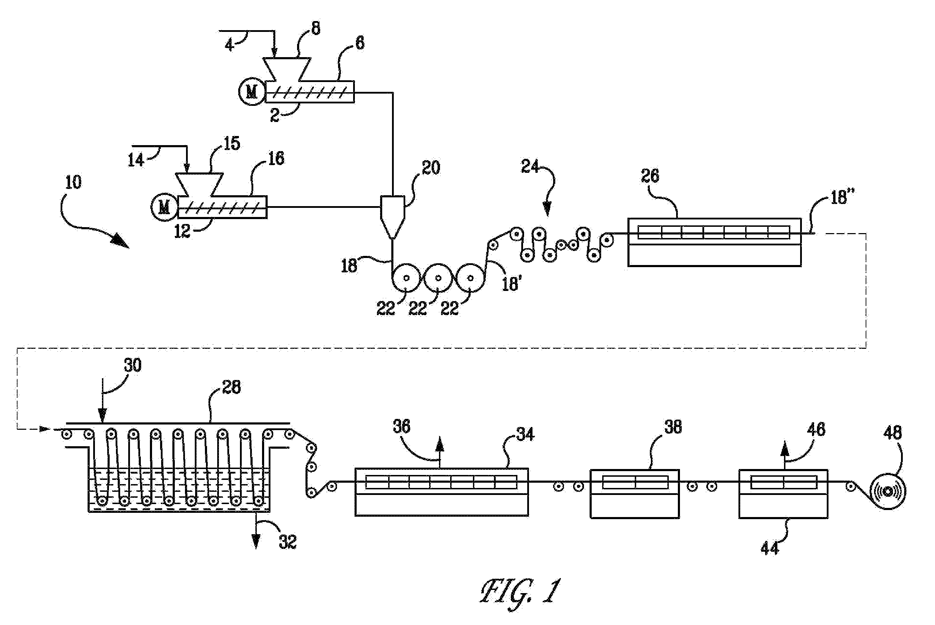

Reference is now made to FIGS. 1-2, wherein like numerals are used to designate like parts throughout.

Referring now to FIG. 1, a system 10 for producing a coextruded multilayer microporous film or sheet of thermoplastic material is shown. System 10 includes a first extruder 12, first extruder 12 having a feed hopper 15 for receiving one or more polymeric materials, processing additives, or the like, fed by a line 14. First extruder 12 also receives a nonvolatile solvent or diluent, such as paraffin oil, through a solvent feedline 16. A first polymeric solution is prepared within first extruder 12 by dissolving the polymer with heating and mixing in the solvent. System 10 also includes a second extruder 2, second extruder 2 having a feed hopper 8 for receiving one or more polymeric materials, processing additives, or the like, fed by a line 4. Second extruder 2 also receives a nonvolatile solvent or diluent, such as paraffin oil, through a solvent feedline 6. A second polymeric solution is prepared within second extruder 2 by dissolving the polymer with heating and mixing in the solvent.

The first and second polymeric solutions may then be coextruded into a multilayer sheet 18 from coextrusion die 20. The first polymeric solution may be divided into two streams to form a first and second skin layer, while the second polymeric solution may be used to form a core layer. While FIG. 1 depicts a system for forming coextruded films and sheets, as those skilled in the art will plainly recognize, the first and second polymeric solutions may also be extruded as separate sheets using separate dies (not shown) and laminated downstream to form a multilayer film and sheet.

Sheet 18 is cooled by a plurality of chill rolls 22 to a temperature lower than the gelling temperature, so that the sheet 18 gels. The cooled extrudate 18' passes to a first orientation apparatus 24, which may be a roll-type stretching machine, as shown. The cooled extrudate 18' is oriented with heating in a first (machine direction (MD)) through the use of a roll-type stretching machine 24 and then the cooled extrudate 18' passes to a second orientation apparatus 26, for sequential orientation in at least a second (transverse direction (TD)), to produce a biaxially oriented multilayer film or sheet 18". Second orientation apparatus 26 may be a tenter-type stretching machine and may be utilized for further stretching in the MD.

The biaxially oriented multilayer film or sheet 18" next passes to a solvent extraction device 28 where a readily volatile solvent such as methylene chloride is fed in through line 30. The volatile solvent containing extracted nonvolatile solvent is recovered from a solvent outflow line 32. The biaxially oriented multilayer film or sheet 18" next passes to a drying device 34, wherein the volatile solvent 36 is evaporated from the biaxially oriented multilayer film or sheet 18".

Optionally, the biaxially oriented multilayer film or sheet 18" next passes to dry orientation device 38 where the dried membrane is stretched to a magnification of from about 1.1 to about 2.5 fold in at least one direction to form a stretched membrane. Next, the biaxially oriented multilayer film or sheet 18" next passes to the heat treatment device 44 where the biaxially oriented film or sheet 18" is annealed so as to adjust porosity and remove stress left in the film or sheet 18", after which and biaxially oriented multilayer film or sheet 18" is rolled up to form product roll 48.

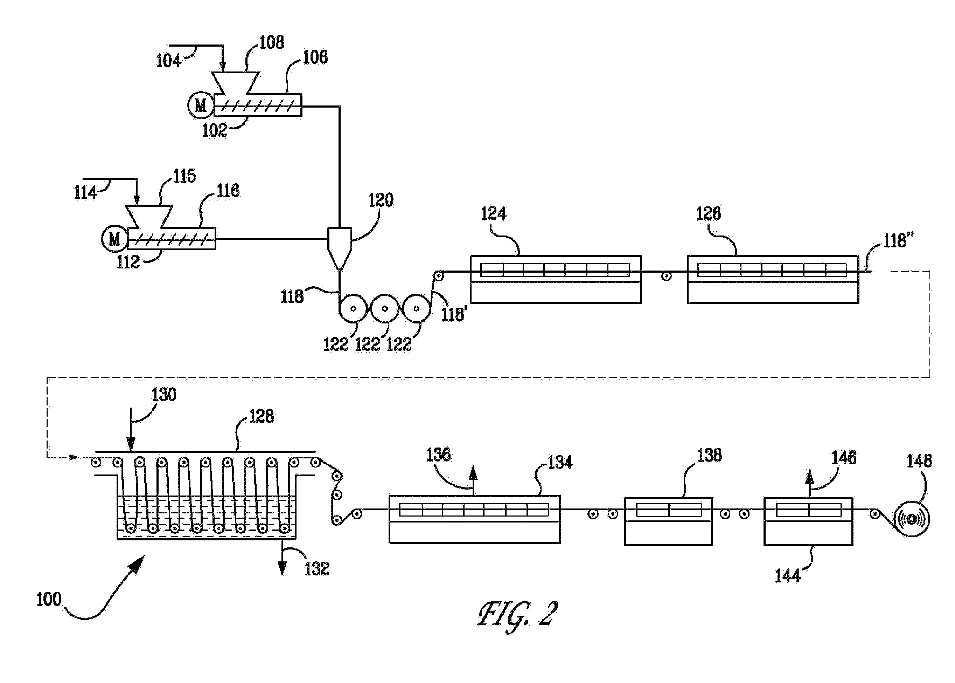

Referring now to FIG. 2, another form of a system 100 for producing a coextruded multilayer microporous film or sheet of thermoplastic material is shown. System 100 includes a first extruder 112, first extruder 112 having a feed hopper 115 for receiving one or more polymeric materials, processing additives, or the like, feed by a line 114. As with the system of FIG.1, first extruder 112 also receives a nonvolatile solvent or diluent, such as paraffin oil, through a solvent feedline 116. A first polymeric solution is prepared within first extruder 112 by dissolving the polymer with heating and mixing in the solvent. System 100 also includes a second extruder 102, second extruder 102 having a feed hopper 108 for receiving one or more polymeric materials, processing additives, or the like, fed by a line 104. Second extruder 102 also receives a nonvolatile solvent or diluent, such as paraffin oil, through a solvent feedline 106. A second polymeric solution is prepared within second extruder 102 by dissolving the polymer with heating and mixing in the solvent.

The first and second polymeric solutions may then be coextruded into a multilayer sheet 118 from coextrusion die 120. The first polymeric solution may be divided into two streams to form a first and second skin layer, while the second polymeric solution may be used to form a core layer. While FIG. 2 depicts a system for forming coextruded films and sheets, as described above, the first and second polymeric solutions may also be extruded as separate sheets using separate dies (not shown) and laminated downstream to form a multilayer film and sheet.

Sheet 118 is cooled by a plurality of chill rolls122 to a temperature lower than the gelling temperature, so that the sheet 118 gels. The cooled extrudate 118' passes to a first orientation apparatus 124, which may be a tenter-type stretching machine, as shown. The cooled coextrudate 118' is oriented with heating in a first direction (MD or TD) and, optionally, a second direction (TD or MD) and then the cooled extrudate 118' passes to a second orientation apparatus 126, for sequential orientation in the MD and TD, to produce a biaxially oriented coextruded multilayer film or sheet 118". Second orientation apparatus 126 may also be a tenter-type stretching machine.

The biaxially oriented multilayer film or sheet 118" next passes to a solvent extraction device 128 where a readily volatile solvent such as methylene chloride is fed in through line 130. The volatile solvent containing extracted nonvolatile solvent is recovered from a solvent outflow line 132. The biaxially oriented multilayer film or sheet 118" next passes to a drying device 134, wherein the volatile solvent 136 is evaporated from the biaxially oriented multilayer film or sheet 118".

Optionally, the biaxially oriented multilayer film or sheet 118" next passes to dry orientation device 38 where the dried membrane is stretched to a magnification of from about 1.1 to about 2.5 fold in at least one direction to form a stretched membrane. Next, the biaxially oriented multilayer film or sheet 18" next passes to the heat treatment device 144 where the biaxially oriented film or sheet 18" is annealed so as to adjust porosity and remove stress left in the film or sheet 18", after which biaxially oriented multilayer film or sheet 118" is rolled up to form product roll 148.

As indicated, the systems disclosed herein are useful in forming coextruded multilayer microporous polyolefin membrane films and sheets. These films and sheets find particular utility in the critical field of battery separators. The films and sheets disclosed herein provide a good balance of key properties, including high meltdown temperature, improved surface smoothness and improved electrochemical stability while maintaining high permeability, good mechanical strength and low heat shrinkage with good compression resistance. Of particular importance when used as a battery separator, the microporous membranes disclosed herein exhibit excellent heat shrinkage, melt down temperature and thermal mechanical properties; i.e., reduced maximum shrinkage in the molten state.

In one form, the multilayer, microporous polyolefin membrane comprises two layers. The first layer (e.g., the skin, top or upper layer of the membrane) comprises a first microporous layer material, and the second layer (e.g., the bottom or lower or core layer of the membrane) comprises a second microporous layer material. For example, the membrane can have a planar top layer when viewed from above on an axis approximately perpendicular to the transverse and longitudinal (machine) directions of the membrane, with the bottom planar layer hidden from view by the top layer.

In another form, the coextruded multilayer, microporous polyolefin membrane comprises three or more layers, wherein the outer layers (also called the "surface" or "skin" layers) comprise the first microporous layer material and at least one core or intermediate layer comprises the second microporous layer material. In a related form, where the coextruded multilayer, microporous polyolefin membrane comprises two layers, the first layer consists essentially of the first microporous layer material and the second layer consists essentially of the second microporous layer material. In a related form where the coextruded multilayer, microporous polyolefin membrane comprises three or more layers, the outer layers consist essentially of the first microporous layer material and at least one intermediate layer consists essentially of (or consists of) the second microporous layer material.

Starting materials having utility in the production of the afore-mentioned films and sheets will now be described. As will be appreciated by those skilled in the art, the selection of a starting material is not critical as long as the systems disclosed herein can be applied. In one form, the first and second microporous layer materials contain polyethylene. In one form, the first microporous layer material contains a first polyethylene ("PE-1") having an Mw value of less than about 1 x 10⁶ or a second polyethylene ("UHMWPE-1") having an Mw value of at least about 1 x 10⁶. In one form, the first microporous layer material can contain a first polypropylene ("PP-1"). In one form, the first microporous layer material comprises one of (i) a polyethylene (PE), (ii) an ultra high molecular weight polyethylene (UHMWPE), (iii) PE-1 and PP-1, or (iv) PE-1, UHMWPE-1, and PP-1. In another form, the first microporous layer material comprises either
PE-1 and PP-1; or
PE-1, UHMWPE-1, and PP-1.

In one form of the above (ii) and (iv), UHMWPE-1 can preferably have an Mw in the range of from about 1 x 10⁶ to about 15 x 10⁶ or from about 1 x 10⁶ to about 5 x 10⁶ or from about 1 x 10⁶ to about 3 x 10⁶. For forms (ii) and (iv), the amount of UHMWPE-1 (in wt.%, on the basis of total weight of the first layer material) be, e.g., less than about 80% (e.g., 20% to 80%) or less than about 70% (e.g., about 40% to about 70%) or less than about 7 wt.%, in order to obtain a microporous layer having a hybrid structure defined in the later section, and can be at least one of homopolymer or copolymer. In one form of the above (iii) and (iv), PP-1 can be at least one of a homopolymer or copolymer. In one form, the amount of PP-1 can be, e.g., 5 to 60%, or from 30% to 50%, (in wt.%, on the basis of total weight of the first layer material). In another form, the amount of PP-1 can be, e.g., no more than about 25 wt.%, more preferably about 2 wt.% to about 15 wt.%, most preferably about 3 wt.% to about 10 wt.%, on the basis of total weight of the first layer material. When the first or second layer material is microporous, as is ordinarily the case in the resulting microporous membrane, the first and second layer materials can be called first and second microporous layer materials. In one form, the Mw of polyolefin in the first microporous layer material can have about 2 x 10⁶ or less, or in the range of from about 1 x 10⁵ to about 2 x 10⁶ or from about 2 x 10⁵ to about 1.5 x 10⁶ in order to obtain a microporous layer having a hybrid structure defined in the later section. In one form, PE-1 can preferably have an Mw ranging from about 1 x 10⁴ to about 5 x 10⁵, or from about 2 x 10⁵ to about 4 x 10⁵, and can be one or more of a high-density polyethylene, a medium-density polyethylene, a branched low-density polyethylene, or a linear low-density polyethylene, and can be at least one of a homopolymer or copolymer.

In one form, polypropylene can be, for example, one or more of (i) a propylene homopolymer or (ii) a copolymer of propylene and a fifth olefin. The copolymer can be a random or block copolymer. The fifth olefin can be, e.g., one or more of α-olefins such as ethylene, butene-1, pentene-1, hexene-1, 4-methylpentene-1, octene-1, vinyl acetate, methyl methacrylate, and styrene, etc.; and diolefins such as butadiene, 1,5-hexadiene, 1,7-octadiene, 1,9-decadiene, etc. The amount of the fifth olefin in the copolymer is preferably in a range that does not adversely affect properties of the multi-layer microporous membrane such as heat resistance, compression resistance, heat shrinkage resistance, etc. For example, the amount of the fifth olefin can be less than 10% by mol based on 100% by mol of the entire copolymer. Optionally, the polypropylene has one or more of the following properties: (i) the polypropylene has an Mw ranging from about 1 x 10⁴ to about 4 x 10⁶, or about 3 x 10⁵ to about 3 x 10⁶, or about 6 x 10⁵ to about 1.5 x 10⁶ ,(ii) the polypropylene has an Mw/Mn ranging from about 1.01 to about 100, or about 1.1 to about 50, or about 3 to about 30; (iii) the polypropylene's tacticity is isotactic; (iv) the polypropylene has a heat of fusion of at least about 90 Joules/gram or about 100 J/g to 120 J/g; (v) polypropylene has a melting peak (second melt) of at least about 160°C, (vi) the polypropylene has a Trouton's ratio of at least about 15 when measured at a temperature of about 230°C and a strain rate of 25 see⁻¹; and/or (vii) the polypropylene has an elongational viscosity of at least about 50,000 Pa sec at a temperature of 230°C and a strain rate of 25 sec⁻¹. Optionally, the polypropylene has an Mw/Mn ranging from about 1.01 to about 100, or from about 1.1 to about 50.

In one form, the first microporous layer material (the first layer of the two-layer, coextruded microporous polyolefin membrane and the first and third layers of a three-layer coextruded microporous polyolefin membrane) has a hybrid structure, which is characterized by a pore size distribution exhibiting relatively dense domains having a main peak in a range of 0.01 µm to 0.08 µm and relatively coarse domains exhibiting at least one sub-peak in a range of more than 0.08 µm to 1.5 µm or less in the pore size distribution curve. The ratio of the pore volume of the dense domains (calculated from the main peak) to the pore volume of the coarse domains (calculated from the sub-peak) is not critical, and can range, e.g., from about 0.5 to about 49.

In one form, the second microporous layer material comprises one of: (i) a fourth polyethylene having an Mw of at least about 1 x 10⁶, (UHMWPE-2), (ii) a third polyethylene having an Mw that is less than 1 x 10⁶ and UHMWPE-2 and the fourth polyethylene, wherein the fourth polyethylene is present in an amount of from 0% to 40%, or from 0% to 30% or at least about 8% by mass based on the combined mass of the third and fourth polyethylene; (iii) UHMWPE-2 and PP-2, or (iv) PE-2, UHMWPE-2, and PP-2. In one form of the above (ii), (iii) and (iv), UHMWPE-2 is present in an amount of from 0% to 40%, or from 0% to 30% or at least about 8% by mass based on based on the total amount of UHMWPE-2, PE-2 and PP-2 in order to produce a relatively strong coextruded multilayer, microporous polyolefin membrane. In one form of the above (iii) and (iv), PP-2 can be at least one of a homopolymer or copolymer, and can contain 60% or less (e.g., from 0% to 60%) or 50% or less (e.g., from 0% to 50%), or 25 wt.% or less, or in the range of from about 2% to about 15%, or in the range of from about 3% to about 10%, based on the total amount of the second microporous layer material. In one form, preferable PE-2 can be the same as PE-1, but can be selected independently. In one form, preferable UHMWPE-2 can be the same as UHMWPE-1, but can be selected independently.

In addition to the first, second, third, and fourth polyethylenes and the first and second polypropylenes, each of the first and second layer materials can optionally contain one or more additional polyolefins, identified as the seventh polyolefin, which can be, e.g., one or more of polybutene-1, polypentene-1, poly-4-methylpentene-1, polyhexene-1, polyoctene-1, polyvinyl acetate, polymethyl methacrylate, polystyrene and an ethylene α-olefin copolymer (except for an ethylene-propylene copolymer) and can have an Mw in the range of about 1 x 10⁴ to about 4 x 10⁶. In addition to or besides the seventh polyolefin, the first and second microporous layer materials can further comprise a polyethylene wax, e.g., one having an Mw in the range of about 1 x 10³ to about 1 x 10⁴.

In one form, a process for producing a two-layer coextruded microporous polyolefin membrane is provided wherein a coextrusion die is employed. In another form, the coextruded microporous polyolefin membrane has at least three layers and is produced through the use of a coextrusion die. For the sake of brevity, the production of the coextruded microporous polyolefin membrane will be mainly described in terms of two-layer and three-layer coextruded membrane.

In one form, a three-layer coextruded microporous polyolefin membrane comprises first and third microporous layers constituting the outer layers of the microporous polyolefin membrane and a second (core) layer situated between (and optionally in planar contact with) the first and third layers. In another form, the first and third layers are produced from a first polyolefin solution and the second (core) layer is produced from a second polyolefin solution.

In one form, a method for producing the multilayer, microporous polyolefin membrane is provided. The method comprises the steps of (1) combining (e.g., by melt-blending) a first polyolefin composition and a membrane-forming solvent to prepare a first polyolefin solution, (2) combining a second polyolefin composition and a second membrane-forming solvent to prepare a second polyolefin solution, (3) coextruding the first and second polyolefin solutions through a coextrusion die to form an coextrudate, (4) cooling the coextrudate to form a multilayer, gel-like sheet (cooled coextrudate), (5) sequentially orienting the cooled coextrudate through the use of a first orientation or stretching step and a second orientation or stretching step, (6) removing the membrane-forming solvent from the multilayer, gel-like sheet to form a solvent-removed gel-like sheet, and (7) drying the solvent-removed gel-like sheet in order to form the multilayer, microporous polyolefin membrane. An optional hot solvent treatment step (8), etc. can be conducted between steps (5) and (6), if desired. After step (7), an optional step (9) of stretching a multilayer, microporous membrane, an optional heat treatment step (10), an optional cross-linking step with ionizing radiations (11), and an optional hydrophilic treatment step (12), etc., can be conducted if desired. The order of the optional steps is not critical.

The first polyolefin composition comprises polyolefin resins as described above that can be combined, e.g., by dry mixing or melt blending with an appropriate membrane-forming solvent to produce the first polyolefin solution. Optionally, the first polyolefin solution can contain various additives such as one or more antioxidant, fine silicate powder (pore-forming material), etc., provided these are used in a concentration range that does not significantly degrade the desired properties of the coextruded multilayer, microporous polyolefin membrane.

The first membrane-forming solvent is preferably a solvent that is liquid at room temperature. While not wishing to be bound by any theory or model, it is believed that the use of a liquid solvent to form the first polyolefin solution makes it possible to conduct stretching of the gel-like sheet at a relatively high stretching magnification. In one form, the first membrane-forming solvent can be at least one of aliphatic, alicyclic or aromatic hydrocarbons such as nonane, decane, decalin, p-xylene, undecane, dodecane, liquid paraffin, etc.; mineral oil distillates having boiling points comparable to those of the above hydrocarbons; and phthalates liquid at room temperature such as dibutyl phthalate, dioctyl phthalate, etc. In one form where it is desired to obtain a multilayer, gel-like sheet having a stable liquid solvent content, non-volatile liquid solvents such as liquid paraffin can be used, either alone or in combination with other solvents. Optionally, a solvent which is miscible with polyethylene in a melt blended state but solid at room temperature can be used, either alone or in combination with a liquid solvent. Such solid solvent can include, e.g., stearyl alcohol, ceryl alcohol, paraffin waxes, etc.

The viscosity of the liquid solvent is not a critical parameter. For example, the viscosity of the liquid solvent can range from about 30 cSt to about 500 cSt, or from about 30 cSt to about 200 cSt, at 25°C. Although it is not a critical parameter, when the viscosity at 25°C is less than about 30 cSt, it can be more difficult to prevent foaming the polyolefin solution, which can lead to difficulty in blending. On the other hand, when the viscosity is greater than about 500 cSt, it can be more difficult to remove the liquid solvent from the coextruded multilayer microporous polyolefin membrane.

In one form, the resins, etc., used to produce to the first polyolefin composition are melt-blended in, e.g., a double screw extruder or mixer. For example, a conventional extruder (or mixer or mixer-extruder) such as a double-screw extruder can be used to combine the resins, etc., to form the first polyolefin composition. The membrane-forming solvent can be added to the polyolefin composition (or alternatively to the resins used to produce the polyolefin composition) at any convenient point in the process. For example, in one form where the first polyolefin composition and the first membrane-forming solvent are melt-blended, the solvent can be added to the polyolefin composition (or its components) at any of (i) before starting melt-blending, (ii) during melt blending of the first polyolefin composition, or (iii) after melt-blending, e.g., by supplying the first membrane-forming solvent to the melt-blended or partially melt-blended polyolefin composition in a second extruder or extruder zone located downstream of the extruder zone used to melt-blend the polyolefin composition.

When melt-blending is used, the melt-blending temperature is not critical. For example, the melt-blending temperature of the first polyolefin solution can range from about 10°C higher than the melting point Tₘ₁ of the polyethylene in the first resin to about 120°C higher than Tₘ₁. For brevity, such a range can be represented as Tₘ₁ + 10°C to Tₘ₁ + 120°C. In a form where the polyethylene in the first resin has a melting point of about 130°C to about 140°C, the melt-blending temperature can range from about 140°C to about 250°C, or from about 170°C to about 240°C.

When an extruder such as a double-screw extruder is used for melt-blending, the screw parameters are not critical. For example, the screw can be characterized by a ratio L/D of the screw length L to the screw diameter D in the double-screw extruder, which can range, for example, from about 20 to about 100 or from about 35 to about 70. Although this parameter is not critical, when L/D is less than about 20, melt-blending can be more difficult, and when L/D is more than about 100, faster extruder speeds might be needed to prevent excessive residence time of the polyolefin solution in the double-screw extruder, which can lead to undesirable molecular weight degradation. Although it is not a critical parameter, the cylinder (or bore) of the double-screw extruder can have an inner diameter of in the range of about 40 mm to about 100 mm, for example.

The amount of the first polyolefin composition in the first polyolefin solution is not critical. In one form, the amount of first polyolefin composition in the first polyolefin solution can range from about 1 wt.% to about 75 wt.%, based on the weight of the polyolefin solution, for example from about 20 wt.% to about 70 wt.%. The second polyolefin solution can be prepared by the same methods used to prepare the first polyolefin solution. For example, the second polyolefin solution can be prepared by melt-blending a second polyolefin composition with a second membrane-forming solvent.

Although it is not a critical parameter, the melt-blending conditions for the second polyolefin solution can differ from the conditions described for producing the first polyolefin composition in that the melt-blending temperature of the second polyolefin solution can range from about the melting point Tₘ₂ of the polyethylene in the second resin + 10°C to Tₘ₂ + 120°C.

The amount of the second polyolefin composition in the second polyolefin solution is not critical. In one form, the amount of second polyolefin composition in the second polyolefin solution can range from about 1 wt.% to about 75 wt.%, based on the weight of the second polyolefin solution, for example from about 20 wt.% to about 70 wt.%.

The first and second polyolefin solutions are coextruded using a coextrusion die, wherein a planar surface of a first coextrudate layer formed from the first polyolefin solution is in contact with a planar surface of a second coextrudate layer formed from the second polyolefin solution. A planar surface of the coextrudate can be defined by a first vector in the machine direction (MD) of the coextrudate and a second vector in the transverse direction (TD) of the coextrudate.

In another form, the first extruder containing the first polyolefin solution is connected to a second die section for producing a first skin layer and a third die section for producing a second skin layer, and a second extruder containing the second polyolefin solution is connected to a first die section for producing a core layer. The resulting layered coextrudate is coextruded to form a three-layer coextrudate comprising a first and a third layer constituting skin or surface layers produced from the first polyolefin solution; and a second layer constituting a core or intermediate layer of the coextrudate situated between and in planar contact with both surface layers, where the second layer is produced from the second polyolefin solution.

The die gap is generally not critical. For example, the multilayer-sheet-forming die can have a die gap of about 0.1 mm to about 5 mm. Die temperature and extruding speed are also non-critical parameters. For example, the die can be heated to a die temperature ranging from about 140°C to about 250°C during extrusion. The extruding speed can range, for example, from about 0.2m/minute to about 15 m/minute. The thickness of the layers of the layered coextrudate can be independently selected. For example, the gel like sheet can have relatively thick skin or surface layers compared to the thickness of an intermediate layer of the layered coextrudate.

While the extrusion has been described in terms of producing two and three-layer coextrudates, the coextrusion step is not limited thereto. For example, a plurality of dies and/or die assemblies can be used to produce multilayer coextrudates having four or more layers using the principles and methods disclosed herein.

The multilayer coextrudate can be formed into a multilayer, gel-like sheet by cooling, for example. Cooling rate and cooling temperature are not particularly critical. For example, the multilayer, gel-like sheet can be cooled at a cooling rate of at least about 50°C/minute until the temperature of the multilayer, gel-like sheet (the cooling temperature) is approximately equal to the multilayer, gel-like sheet's gelatin temperature (or lower). In one form, the coextrudate is cooled to a temperature of about 25°C or lower in order to form the multilayer gel-like sheet.

Prior to the step of removing the membrane-forming solvents, the coextruded multilayer gel-like sheet is stretched in at least a first step and a second step, sequentially, in order to obtain a stretched, coextruded multilayer gel-like sheet.

In one form, the stretching can be accomplished by one or more of tenter-stretching, roller-stretching, or inflation stretching (e.g., with air). Although the choice is not critical, the stretching can be conducted monoaxially (i.e., in either the machine or transverse direction) or biaxially (both the machine and transverse direction). In the case of biaxial stretching (also called biaxial orientation), the stretching can be simultaneous biaxial stretching, sequential stretching along one planar axis and then the other (e.g., first in the transverse direction and then in the machine direction), or multi-stage stretching (for instance, a combination of the simultaneous biaxial stretching and the sequential stretching).

The first stretching magnification is not critical. When monoaxial stretching is used, the first linear stretching magnification can be, e.g., about 1.5 fold or more, or about 1.5 to about 10 fold. When biaxial stretching is used, the linear stretching magnification can be, e.g., about 1.5 fold or more, or about 1.5 fold to about 16 fold in any lateral direction

The total stretching magnification is not critical. When monoaxial stretching is used, the linear stretching magnification can be, e.g., about 2 fold or more, or about 3 to about 30 fold. When biaxial stretching is used, the linear stretching magnification can be, e.g., about 3 fold or more in any lateral direction. In another form, the linear magnification resulting from stretching is at least about 9 fold, or at least about 16 fold, or at least about 25 fold in area magnification.

The temperature of the gel-like sheet during the first orientation or stretching step can be about (Tₘ + 10°C) or lower, or optionally in a range that is higher than T_{cd} - 15°C but lower than T_{cd} + 15°C Tₘ, wherein Tₘ is the lesser of the melting point Tₘ₁ of the polyethylene in the first resin and the melting point Tₘ₂ of the polyethylene in the second resin. In one form, the temperature of the gel-like sheet during the first orientation or stretching step can be about T_{cd} +/- 15°C, or about T_{cd} - 10°C to about T_{cd} + 10°C, or about 90°C to about 100°C.

In accordance herewith, the temperature of the coextruded multilayer gel-like sheet during the second orientation or stretching step can be about 10° C. to about 40° C higher than the temperature employed in the first orientation or stretching step. In one form, the temperature of the coextruded multilayer gel-like sheet during the first orientation or stretching step can be about 115° C. to about 130° C. or about 120° C. to about 125° C.

The stretching makes it easier to produce a relatively high-mechanical strength coextruded multilayer microporous polyolefin membrane with a relatively large pore size. Such coextruded multilayer microporous membranes are believed to be particularly suitable for use as battery separators.

In one form, the first and second membrane-forming solvents are removed (or displaced) from the coextruded multilayer gel-like sheet in order to form a solvent-removed coextruded gel-like sheet. A displacing (or "washing") solvent can be used to remove (wash away, or displace) the first and second membrane-forming solvents. The choice of washing solvent is not critical provided it is capable of dissolving or displacing at least a portion of the first and/or second membrane-forming solvent. Suitable washing solvents include, for instance, one or more of volatile solvents such as saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorocarbons such as trifluoroethane, C₆F₁₄, C₇F₁₆, etc.; cyclic hydrofluorocarbons such as C₅H₃F₇, etc.; hydrofluoroethers such as C₄F₉OCH₃, C₄F₉OC₂H₅, etc.; and perfluoroethers such as C₄F₉OCF₃, C₄F₉O C₂H₅, etc.

The method for removing the membrane-forming solvent is not critical, and any method capable of removing a significant amount of solvent can be used, including conventional solvent-removal methods. For example, the coextruded multilayer, gel-like sheet can be washed by immersing the sheet in the washing solvent and/or showering the sheet with the washing solvent. The amount of washing solvent used is not critical, and will generally depend on the method selected for removal of the membrane-forming solvent. In one form, the membrane-forming solvent is removed from the coextruded gel-like sheet (e.g., by washing) until the amount of the remaining membrane-forming solvent in the coextruded multilayer gel-like sheet becomes less than 1 wt.%, based on the weight of the gel-like sheet.

In one form, the solvent-removed coextruded multilayer, gel-like sheet obtained by removing the membrane-forming solvent is dried in order to remove the washing solvent. Any method capable of removing the washing solvent can be used, including conventional methods such as heat-drying, wind-drying (moving air), etc. The temperature of the gel-like sheet during drying (i.e., drying temperature) is not critical. For example, the drying temperature can be equal to or lower than the crystal dispersion temperature T_{cd}. T_{cd} is the lower of the crystal dispersion temperature T_{cd1} of the polyethylene in the first resin and the crystal dispersion temperature T_{cd2} of the polyethylene in the second resin. For example, the drying temperature can be at least 5°C below the crystal dispersion temperature T_{cd}. The crystal dispersion temperature of the polyethylene in the first and second resins can be determined by measuring the temperature characteristics of the kinetic viscoelasticity of the polyethylene according to ASTM D 4065. In one form, the polyethylene in at least one of the first or second resins has a crystal dispersion temperature in the range of about 90°C to about 100°C.

Although it is not critical, drying can be conducted until the amount of remaining washing solvent is about 5 wt. % or less on a dry basis, i.e., based on the weight of the dry multilayer, microporous polyolefin membrane. In another form, drying is conducted until the amount of remaining washing solvent is about 3 wt. % or less on a dry basis.

Although it is not required, the coextruded multilayer, gel-like sheet can be treated with a hot solvent. When used, it is believed that the hot solvent treatment provides the fibrils (such as those formed by stretching the coextruded multilayer gel-like sheet) with a relatively thick leaf-vein-like structure. The details of this method are described in WO 2000/20493.

In one form, the dried coextruded multilayer, microporous membrane can be stretched, at least monoaxially. The stretching method selected is not critical, and conventional stretching methods can be used such as by a tenter method, etc. While it is not critical, the membrane can be heated during stretching. When the coextruded multilayer gel-like sheet has been stretched as described above the stretching of the dry coextruded multilayer, microporous polyolefin membrane can be called dry-stretching, re-stretching, or dry-orientation.

The temperature of the dry coextruded multilayer, microporous membrane during stretching (the "dry stretching temperature") is not critical. In one form, the dry stretching temperature is approximately equal to the melting point Tₘ or lower, for example in the range of from about the crystal dispersion temperature T_{cd} to the about the melting point Tₘ. In one form, the dry stretching temperature ranges from about 90°C to about 135°C, or from about 95°C to about 130°C.

When dry-stretching is used, the stretching magnification is not critical. For example, the stretching magnification of the microporous membrane can range from about 1.1 fold to about 2.5 or about 1.1 to about 2.0 fold in at least one lateral (planar) direction.

In one form, the membrane relaxes (or shrinks) in the direction(s) of stretching to a achieve a final magnification of about 1.0 to about 2.0 fold compared to the size of the film at the start of the dry orientation step

In one form, the dried coextruded multilayer, microporous membrane can be heat-treated. In one form, the heat treatment comprises heat-setting and/or annealing. When heat-setting is used, it can be conducted using conventional methods such as tenter methods and/or roller methods. Although it is not critical, the temperature of the dried coextruded multilayer, microporous polyolefin membrane during heat-setting (i.e., the "heat-setting temperature") can range from the T_{cd} to about the Tₘ.

Annealing differs from heat-setting in that it is a heat treatment with no load applied to the coextruded multilayer, microporous polyolefin membrane. The choice of annealing method is not critical, and it can be conducted, for example, by using a heating chamber with a belt conveyer or an air-floating-type heating chamber. Alternatively, the annealing can be conducted after the heat-setting with the tenter clips slackened. The temperature of the coextruded multilayer, microporous polyolefin membrane during annealing can range from about the melting point Tₘ or lower, or in a range from about 60°C to (Tₘ - 10°C), or from about 60°C to (Tₘ - 5°C).

In one form, the coextruded multilayer, microporous polyolefin membrane can be cross-linked (e.g., by ionizing radiation rays such as a-rays, (3-rays, 7-rays, electron beams, etc.) or can be subjected to a hydrophilic treatment (i.e., a treatment which makes the coextruded multilayer, microporous polyolefin membrane more hydrophilic (e.g., a monomer-grafting treatment, a surfactant treatment, a corona-discharging treatment, etc.))).

When produced by coextrusion, the multi-layer microporous membrane may be manufactured by the steps of (1a) combining a first polyolefin composition and at least one diluent or solvent, for example a membrane-forming solvent, to form a first polyolefin solution, the first polyolefin composition comprising (a) from about 20% to about 80%, or about 30% to about 70 %, for example from about 40 to about 60 %, of a first polyethylene resin having a weight average molecular weight of from about 2.5 x 10⁵ to about 5 x 10⁵ and a molecular weight distribution of from about 5 to about 100, (b) from about10% to about 60%, or about 20 to about 40 %, for example from about 30% to about 50%, or about 25 to about 40 %, of a first polypropylene resin having a weight average molecular weight of from about 0.6x 10⁶ to about 1.5 x 10⁶, a molecular weight distribution of from about 1 to about 100 and a heat of fusion of 80 J/g or higher, or 90J/g or higher, for example from 100J/g to 120 J/g, and (c) from about 0 to about 30 %, for example from about 0 to about 25 % or from 0 to about 10%, of a second polyethylene resin having a weight average molecular weight of from about 1 x 10⁶ to about 5 x 10⁶, a molecular weight distribution of from about 5 to about 100 the percentages based on the weight of the first polyolefin composition, (1b) combining a second polyolefin composition and at least one diluent or solvent, for example a membrane-forming solvent, to form a second polyolefin solution, the second polyolefin composition comprising (a) from about 20 to about 100% or about 60 to about 90 %, for example from about 30 to about 100% or about 70 to about 85 %, of the first polyethylene resin having a weight average molecular weight of from about 2.5 x 10⁵ to about 5 x 10⁵ and a molecular weight distribution of from about 5 to about 100, and (a') from about 0 to about 40 %, for example from about 15 to about 30 %, of a second polyethylene resin having a weight average molecular weight of from about 1 x 10⁶ to about 5 x 10⁶ and a molecular weight distribution of from about 5 to about 100, percentages based on the weight of the second polyolefin composition, (2) simultaneously extruding the first and second polyolefin solutions through dies to form first and second extrudates such that they are in planar contact one with the other, (3) simultaneously cooling the first and second extrudates to form cooled extrudates having high polyolefin content, (4) stretching the cooled extrudates in at least one direction at a high stretching temperature to form a stretched sheet comprising a first layer material and a second layer material, (5) removing at least a portion of the diluent or solvent from the stretched sheet to form a membrane comprising a first layer material and a second layer material, (6) optionally stretching the membrane to a high magnification in at least one direction to form a stretched membrane comprising a first layer material and a second layer material, and (7) heat-setting the stretched membrane product of step (6) to form the coextruded microporous membrane comprising a first layer material and a second layer material. When the second polyolefin composition contains polypropylene, the type and amount of polypropylene can be the same as that described for the first polyolefin composition.

Of course, coextrusion may comprise more than one first layer material and more than one second layer material by way of extruding any number of polyolefin solutions comprising respective polyolefin compositions such that step (2) of the method results in simultaneously extruding the various polyolefin solutions through dies to form respective extrudates such that they are in planar contact one with the other. For example, the extrudates in planar contact one with the other may comprise a first layer and a second layer; a first layer, a second layer, and a first layer; a first layer, a second layer, a first layer, and a second layer; etc.

In one form, the multi-layer microporous membrane is manufactured by steps which in include layering, such as for example by lamination, one or more first material layers with one or more second material layers, the first material layers on one or both sides of the second material layers. The first material layer is manufactured by (1) combining a first polyolefin composition and at least one diluent or solvent, for example a membrane-forming solvent, to form a first polyolefin solution, the first polyolefin composition including from about 20 to about 80% or about 30 to about 70 %, for example from about 40 to about 70 %, of a first polyethylene resin having a weight average molecular weight of from about 2.0 x 10⁵ to about 5 x 10⁵ , for example from about 2.5 x 10⁵ to about 4 x 10⁵ and a molecular weight distribution of from about 5 to about 50, from about 5 to about 60 %, for example from about 30 to about 50 %, of a first polypropylene resin having a weight average molecular weight of 1 x 10⁵ or more, for example from about 3 x 10⁵ to about 4 x 10⁶, or from about 6 x 10⁵ to about 1.5 x 10⁶, a molecular weight distribution of from about 1 to about 30 and a heat of fusion of 90 J/g or higher, for example from about 100 J/g to about 120 J/g, and (c) from about 0 to about 40 %, for example from about 0 to about 30 %, of a second polyethylene resin having a weight average molecular weight of from about 1 x 10⁶ to about 5 x 10⁶, for example from about 1 x 10⁶ to about 3 x 10⁶ and a molecular weight distribution of from about 5 to about 50, and percentages based on the weight of the first polyolefin composition, (2) extruding the first polyolefin solution through a die to form an extrudate, (3) cooling the extrudate to form a cooled extrudate having a high polyolefin content, (4) stretching the cooled extrudate in at least one direction by about one to about ten fold at a temperature of about crystal dispersion temperature of polyethylene composition (T_{cd}) +/- 15° C. and further stretching the cooled extrudate in at least one direction by about one to about ten fold at a temperature about 15 10°C. to about 40°C. higher than the temperature employed in the first orienting step to form a stretched sheet, (5) removing at least a portion of the diluent or solvent from the stretched sheet to form a membrane, (6) optionally, stretching the membrane to a magnification of from about 1.1 to about 2.5 fold in at least one direction to form a stretched membrane, and (7) heat-setting the membrane product of step (6) to form the first material layer microporous membrane. The second material layer is manufactured by steps comprising (1) combining a second polyolefin composition and at least one diluent or solvent, for example a membrane-forming solvent, to form a second polyolefin solution, the second polyolefin composition including from about 20 to about 100 %, for example from about 30 to 100% or about 50 to about 80 %, of the first polyethylene resin having a weight average molecular weight of from about 2.0 x 10⁵ to about 5 x 10⁵, for example from about 2.5 x 10⁵ to about 4 x 10⁵, and a molecular weight distribution of from about 5 to about 50, and (b) from about 0 to about 60 %, for example from about 0 to about 50 %, of a first polypropylene resin having a weight average molecular weight of about 5.0 x 10⁵ or more, for example from about 6.0 x 10⁵ to about 2.0 x 10⁶, or from about 8.0 x 10⁵ to about 1.5 x 10⁶, a molecular weight distribution of from about 1 to about 30 and a heat of fusion of 90 J/g or higher, for example from about 100 J/g to about 120J/g, and from about 0 to about 40 %, for example from about 0 to about 30 %, of a second polyethylene resin having a weight average molecular weight of from about 1 x 10⁶ to about 5 x 10⁶ , for example from about 1 x 10⁶ to about 3 x 10⁶, and a molecular weight distribution of from about 5 to about 50, and percentages based on the weight of the second polyolefin composition,(2) extruding the second polyolefin solution through a die to form an extrudate, (3) cooling the extrudate to form a cooled extrudate having a high polyolefin content, (4) stretching the cooled extrudate in at least one direction by about one to about ten fold at a temperature of about crystal dispersion temperature of polyethylene composition (T_{cd}) +/- 15° C. and further stretching the cooled extrudate in at least one direction by about one to about ten fold at a temperature about 10° C. to about 40°C. higher than the temperature employed in the first orienting step to form a stretched sheet, (5) removing at least a portion of the diluent or solvent from the stretched sheet to form a membrane, (6) stretching the membrane to a magnification of from about 1.1 to about 2.5 fold in at least one direction to form a stretched membrane, and (7) heat-setting the membrane product of step (6) to form the second material layer microporous membrane. The first and second material layers may be layered with each other downstream of the above step (7), or may be layered with each other at any of steps (3) through (7). The layer thickness ratio of the total of the first material layer(s) to the total of the second material layer(s) is from about 10/90 to about 90/10, for example from about 20/80 to about 80/20.

### Properties of the Microporous Membrane

In one form, the microporous membrane has a thickness ranging from about 3 µm to about 200 µm, or about 5 µm to about 50 µm.

### A. Porosity of About 25 % to About 80 %

When the porosity is less than 25%, the microporous membrane generally does not exhibit the desired air permeability necessary for use as a battery separator. When the porosity exceeds 80%, it is more difficult to produce a battery separator of the desired strength, which can increase the likelihood of internal electrode short-circuiting.

### B. Air Permeability of About 20 Seconds/100 cm³ to About 400 Seconds/100 cm³ (Converted to Value at 20 µm Thickness)

When the air permeability of the microporous membrane (as measured according to JIS P8117) ranges from about 20 seconds/100 cm³ to about 400 seconds/100 cm³, it is less difficult to form batteries having the desired charge storage capacity and desired cyclability. When the air permeability is less than about 20 seconds/100 cm³, it is more difficult to produce a battery having the desired shutdown characteristics, particularly when the temperature inside the battery is elevated. Air permeability P₁ measured on a microporous membrane having a thickness T₁ according to JIS P8117 can be converted to air permeability P₂ at a thickness of 20 µm by the equation of P₂ = (P₁ x 20)/T₁.

### C. Pin Puncture Strength of About 3,000 mN/20 µm or More

The pin puncture strength (converted to the value at a 20 µm membrane thickness) is the maximum load measured when the microporous membrane is pricked with a needle 1 mm in diameter with a spherical end surface (radius R of curvature: 0.5 mm) at a speed of 2 mm/second. When the pin puncture strength of the microporous membrane is less than 3,000 mN/20 µm, it is more difficult to produce a battery having the desired mechanical integrity, durability, and toughness. The pin puncture strength is preferably 3,500 mN/20 µm or more, for example, 4,000 mN/20 µm or more.

### D. Tensile Strength of At Least About 60,000 kPa

When the tensile strength according to ASTM D882 of the microporous membrane is at least about 60,000 kPa in both longitudinal and transverse directions, it is less difficult to produce a battery of the desired mechanical strength. The tensile strength is preferably about 80,000 kPa or more, for example about 100,000 kPa or more.

### E. Tensile Elongation of At Least About 100 %

When the tensile elongation according to ASTM D882 of the microporous membrane is 100% or more in both longitudinal and transverse directions, it is less difficult to produce a battery having the desired mechanical integrity, durability, and toughness.

### F. Heat Shrinkage Ratio of 15% or less, or 10 % or Less

When the heat shrinkage ratio measured after holding the microporous membrane at a temperature of about 105 °C. for 8 hours exceeds 10 % in both longitudinal and transverse directions, it is more difficult to produce a battery that will not exhibit internal short-circuiting when the heat generated in the battery results in the shrinkage of the separators. The heat shrinkage ratio is preferably 12 % or less or 10% or less.

### G. Thickness Fluctuation of 1.0 or Less, e.g., 0.5 or less.

When the thickness fluctuation of a battery separator exceeds 1.0, it is more difficult to produce a battery with appropriate protection against internal short circuiting.

### H. Puncture Strength Fluctuation of 10.0 or Less, e.g., 8 or less.

When the puncture strength fluctuation of a battery separator exceeds 10, it is more difficult to produce a battery having appropriate durability and reliability.

### I. Melt Down Temperature of At Least About 150 °C

In one form, the melt down temperature can range from about 150 °C to about 190 °C. One way to measure melt down temperature involves determining the temperature at which a microporous membrane test piece of 3 mm in the longitudinal direction and 10 mm in the transverse direction is broken by melting, under the conditions that the test piece is heated from room temperature at a heating rate of 5 °C/minute while drawing the test piece in the longitudinal direction under a load of 2 grams using a thermomechanical analyzer such as a TMA/SS6000 available from Seiko Instruments, Inc. The melt down temperature can be in the range of from 160 °C to 190 °C, e.g., from 170°C to 190 °.

### J. Maximum Shrinkage in Molten State of 30 % or Less

The microporous membrane should exhibit a maximum shrinkage in the molten state (about 140 °C) of about 30 % or less, preferably about 25 % or less, using a thermomechanical analyzer such as a TMA/SS6000 available from Seiko Instruments, Inc.

### K. Thickness Variation Ratio of 20 % or Less After Heat Compression

The thickness variation ratio after heat compression at 90 °C under a pressure of 2.2 MPa for 5 minutes is generally 20 % or less per 100 % of the thickness before compression. Batteries comprising microporous membrane separators with a thickness variation ratio of 20 % or less have suitably large capacity and good cyclability.

### L. Air Permeability After Heat Compression of About 100 Seconds/100 cm³ to About 1000 Seconds/100 cm³

The microporous membranes disclosed herein, when heat-compressed at 90 °C under pressure of 2.2 MPa for 5 minutes, have an air permeability (as measured according to JIS P8117) of about 1000 sec/100 cm³ or less, such as from about 100 to about 700 sec/100 cm³. Batteries using such membranes have suitably large capacity and cyclability. The air permeability after heat compression may be, for example, 700 sec/100 cm³ or less.

### M. Battery Capacity Recovery Ratio of 70 % or More (Retention Property of Lithium Ion Secondary Battery)

When a lithium ion secondary battery comprising a separator formed by a microporous membrane is stored at a temperature of 80 °C for 30 days, it is desired that the battery capacity recovery ratio [(capacity after high-temperature storing)/(initial capacity)] x 100 (%) should be 70 % or more. The battery capacity recovery ratio is preferably 75 % or more.

### N. Electrolytic Solution Absorption Speed of a Battery of 2.5 or More Compared to Comparative Example 5

When a lithium ion secondary battery comprising a separator formed by a microporous membrane is manufactured, it is desired that the electrolytic solution absorption speed of the battery should be 2.5 or more (e.g., 3.0 or more) compared to that comprising a separator formed by Comparative Example 5 so as to improve productivity of the battery.

### EXAMPLES

The invention will be illustrated with the following examples. The test methods used in the examples are as follows:
(1) Average Thickness (µm): The thickness of each microporous membrane is measured by a contact thickness meter at 1 cm intervals in the area of 10 cm x 10 cm of the membrane, and measuring data at 100 points are averaged. The measurement can be made using conventional equipment, e.g., a Litematic, produced by Mitsutoyo Corporation.
(2) Thickness Fluctuation: The thickness of each microporous membrane is measured by a contact thickness meter at 1 cm intervals in the area of 10 cm x 10 cm of the membrane, and measuring data at 100 points are averaged. The thickness meter used may be a Litematic, produced by Mitsutoyo Corporation. The thickness fluctuation is the standard deviation of thickness measured as indicated above.
(3) Air Permeability (sec/100 cm³/20 µm):_Air permeability P₁ measured on each microporous membrane having a thickness T₁ according to JIS P8117 is converted to air permeability P₂ at a thickness of 20 µm by the equation of P₂ = (P₁ x 20)/T_{1.}
(4) Porosity (%):_Measured by a weighting method using the formula: Porosity % = 100 x (w₂-w₁)/w₂, wherein "w₁" is the actual weight of film and "w₂" is the assumed weight of 100% polyethylene.
(5) Pin Puncture Strength measured in mN and converted to a thickness of 20 µm (mN/20 µm) as follows: The maximum load in mN is measured when each microporous membrane having a thickness of T₁ is pricked with a needle of 1 mm in diameter with a spherical end surface (radius R of curvature: 0.5 mm) at a speed of 2 mm/second. The measured maximum load L₁ is converted to the maximum load L₂ at a thickness of 20 µm by the equation of L₂ = (L₁ x 20)/T₁, and used as pin puncture strength. Twenty measured data in the area of 10 cm x 10 cm of the membrane are averaged.
(6) Pin Puncture Strength Fluctuation: The maximum load is measured when each microporous membrane having a thickness of T₁ is pricked with a needle of 1 mm in diameter with a spherical end surface (radius R of curvature: 0.5 mm) at a speed of 2 mm/second. The measured maximum load L₁ is converted to the maximum load L₂ at a thickness of 20 µm by the equation of L₂ = (L₁ x 20)/T₁, and used as pin puncture strength. Twenty measured data in the area of 10 cm x 10 cm of the membrane are averaged. Also pin puncture strength fluctuation is the standard deviation of the strength measured at 20 points.
(7) Tensile Strength and Tensile Elongation: Measured on a 10 mm wide rectangular test piece according to ASTM D882.
(8) Heat Shrinkage Ratio (%): The shrinkage ratios of each microporous membrane in both longitudinal and transverse directions are measured three times when exposed to 105 °C for 8 hours, and averaged to determine the heat shrinkage ratio.
(9) Melt Down Temperature (°C) and Maximum Shrinkage in Molten State: The melt down temperature and maximum shrinkage in the molten state may be measured as follows: a rectangular sample of 3 mm x 50 mm is cut out of the microporous membrane such that the longitudinal direction of the sample is aligned with the transverse direction of the microporous membrane, and set in a thermomechanical analyzer (TMA/SS6000 available from Seiko Instruments, Inc.) at a chuck distance of 10 mm. With a load of 19.6 mN applied to a lower end of the sample, the temperature is elevated at a rate of 5 °C/minute to measure its size change. A size change ratio is calculated relative to the size at 23 °C, to obtain a temperature-size change ratio curve. The maximum shrinkage ratio in the molten state is observed in a temperature range of from 135°C to 145 °C. The maximum shrinkage in the molten state is measured at 140 °C. Melt down temperature is the temperature at which the membrane breaks.
(11) Thickness Variation Ratio After Heat Compression: A microporous membrane sample is situated between a pair of highly flat plates, and heat-compressed by a press machine under a pressure of 2.2 MPa (22 kgf/cm²) at 90 °C for 5 minutes, to determine an average thickness in the same manner as above. A thickness variation ratio (represented as a %) is calculated by the formula of (average thickness after compression - average thickness before compression) / (average thickness before compression) x 100. Air permeability after heat compression is measured with respect to air permeability according to JIS P8117 after heat-compressed under the above conditions.
(12) Air Permeability After Heat Compression (sec/100 cm³): A microporous membrane sample is situated between a pair of highly flat plates and heat-compressed by a press machine under a pressure of 2.2 MPa (22 kgf/cm²) at 90 °C for 5 minutes, to determine an average thickness in the same manner as above. A thickness variation ratio is calculated by the formula of (average thickness after compression - average thickness before compression) / (average thickness before compression) x 100. Air permeability after heat compression is measured with respect to air permeability according to JIS P8117 after heat-compressed under the above conditions.
(13) Capacity Recovery Ratio: The capacity recovery ratio of a lithium ion battery containing the microporous membrane as a separator is measured as follows: First, the discharge capacity (initial capacity) of the lithium ion battery is measured by a charge/discharge tester before high temperature storage. After being stored at a temperature of 80 °C for 30 days, the discharge capacity is measured again by the same method to obtain the capacity after high temperature storage. The capacity recovery ratio (%) of the battery is determined by the following equation: Capacity recovery ratio (%) = [(capacity after high temperature storage) / (initial capacity)] x 100.
(14) Electrolytic Solution Absorption Speed: Using a dynamic surface tension measuring apparatus (DCAT21 with high-precision electronic balance, available from Eiko Instruments Co., ltd.), a microporous membrane sample is immersed in an electrolytic solution (electrolyte: 1 mol/L of LiPF6, solvent: ethylene carbonate/dimethyl carbonate at a volume ratio of 3/7) kept at 18 °C, to determine an electrolytic solution absorption speed by the formula of [weight increment (g) of microporous membrane / weight (g) of microporous membrane before absorption]. The electrolytic solution absorption speed is expressed by a relative value, assuming that the electrolytic solution absorption rate in the microporous membrane of Comparative Example 5 is 1.

### EXAMPLE 1

Dry-blended were 99.8 parts by mass of a first polyolefin composition comprising 5% by mass of ultra-high-molecular-weight polyethylene (UHMWPE) having a weight-average molecular weight (Mw) of 2.0 x 10⁶, a molecular weight distribution (Mw/Mn) of 8.0, a melting point (Tₘ) of 135°C, and a crystal dispersion temperature (T_{cd}) of 100°C, 45% by mass of high-density polyethylene (HDPE) having a Mw of 3.0 x 10⁵ and Mw/Mn of 8.6, Tm of 135°C, and T_{cd} of 100°C, and 50% by mass of a polypropylene (PP) having a Mw of 1.1 x 10⁶ and Mw/Mn of 5.0, and a heat of fusion of 114, and 0.2 parts by mass of tetrakis [methylene-3 -(3,5-ditertiary-butyl-4-hydroxyphenyI)-propionate] methane as an antioxidant. The polyethylene composition had a Tₘ of 135°C, and T_{cd} of 100°C.

Twenty-five parts by mass of the resultant mixture was charged into a strong-blending double-screw extruder having an inner diameter of 58 mm and L/D of 52.5, and 75 parts by mass of liquid paraffin [50 cst (40°C)] was supplied to the double-screw extruder via a side feeder. Melt-blending was conducted at 210°C and 200 rpm to prepare a first polyolefin solution.

A second polyolefin composition was formed by dry-blending 99.8 parts by mass of a polyolefin composition comprising 20% by mass of ultra-high-molecular-weight polyethylene (UHMWPE) having a weight-average molecular weight (Mw) of 2.0 x 10⁶, a molecular weight distribution (Mw/Mn) of 8.0, a melting point (Tₘ) of 135°C, and a crystal dispersion temperature (T_{cd}) of 100°C, 80% by mass of high-density polyethylene (HDPE) having a Mw of 3.0 x 10⁵ and Mw/Mn of 8.6, Tₘ of 135°C, and T_{cd} of 100°C, and 0.2 parts by mass of tetrakis [methylene-3 -(3,5-ditertiary-butyl-4-hydroxyphenyI)-propionate] methane as an antioxidant. The polyolefin composition had a Mw/Mn of 8.6, a Tₘ of 135°C, and T_{cd} of 100°C.

Thirty-five parts by mass of the resultant mixture was charged into a second strong-blending double-screw extruder having an inner diameter of 58 mm and L/D of 52.5, and 65 parts by mass of liquid paraffin [50 cst (40°C)] was supplied to the double-screw extruder via a side feeder. Melt-blending was conducted at 210°C and 200 rpm to prepare a second polyolefin solution.

The Mw and Mw/Mn of each UHMWPE and HDPE were measured by a gel permeation chromatography (GPC) method under the following conditions.
Measurement apparatus: GPC-150C available from Waters Corporation,
Column: Shodex UT806M available from Showa Denko K.K., Column temperature: 135°C,
Solvent (mobile phase): o-dichlorobenzene,
Solvent flow rate: 1.0 ml/minute,
Sample concentration: 0.1% by weight (dissolved at 135°C for 1 hour),
Injected amount: 500
Detector: Differential Refractometer available from Waters Corp., and
Calibration curve: Produced from a calibration curve of a single-dispersion, standard polystyrene sample using a predetermined conversion constant.

The first and second polyolefin solutions were supplied from their respective double-screw extruders to a multilayer sheet-forming T-die at 210°C, to form a coextrudate. The coextrudate was cooled while passing through cooling rolls controlled at 0°C, to form a gel-like sheet. Using a first tenter-stretching machine, the coextruded multilayer gel-like sheet was biaxially stretched at 100.0° C, to 2 fold in both machine and transverse directions. Using a second tenter-stretching machine, the coextruded multilayer gel-like sheet was again biaxially stretched, this time at 120.0° C, to 2.5, fold in both machine and transverse directions.

The stretched coextruded multilayer gel-like sheet was fixed to an aluminum frame of 20 cm x 20 cm, and immersed in a bath of methylene chloride controlled at a temperature of 25° C. to remove the liquid paraffin with a vibration of 100 rpm for 3 minutes. The resulting coextruded multilayer membrane was air-cooled at room temperature. The dried coextruded multilayer membrane was re-stretched by a batch-stretching machine to a magnification of 1.4 fold in a transverse direction at 125°C. The re-stretched coextruded multilayer membrane, which remained fixed to the batch-stretching machine, was heat-set at 125° C. for 10 minutes to produce a microporous polyolefin membrane. The resulting oriented coextruded multilayer membrane was washed with methylene chloride to remove residual liquid paraffin, followed by drying.

There was obtained a microporous membrane of polypropylene having the characteristic properties as shown in Tables 1-3B.

### EXAMPLE 2

Example 1 was repeated except for the second stretching temperature of the cooled coextrudate, which was 125° C.

There was obtained a microporous membrane of polypropylene having the characteristic properties as shown in Tables 1-3B.

### EXAMPLE 3

Example 1 was repeated except that the layer thickness ratio of the first polyolefin composition layer / the second polyolefin composition layer / the first polyolefin composition layer is 40/20/40.

There was obtained a microporous membrane of polypropylene having the characteristic properties as shown in Tables 1-3B.

### EXAMPLE 4

Example 1 was repeated except that the magnification of the first wet stretching of the coextruded gel-like sheet was 5 fold in a machine direction and the magnification of the second wet stretching of the gel-like sheet was 5 fold in a transverse direction.

There was obtained a microporous membrane of polypropylene having the characteristic properties as shown in Tables 1-3B.

### EXAMPLE 5

Example 1 was repeated except that the percentage of the first polyethylene of the first polyolefin was increased to 65%, the percentage of the first polypropylene of the first polyolefin was decreased to 30%, and the first polypropylene of the first polyolefin was added to the second polyolefin in amount equal to 30%, while the first polyolefin was decreased to 50%.

There was obtained a microporous membrane of polypropylene having the characteristic properties as shown in Tables 1-3B.

### EXAMPLE 6

Example 1 was repeated except that the percentage of the first polyethylene of the first polyolefin was increased to 50%, the percentage of the first polypropylene of the first polyolefin was increased to 50% and the second polyethylene was eliminated.

There was obtained a microporous membrane of polypropylene having the characteristic properties as shown in Tables 1-3B.

### EXAMPLE 7

Example 1 was repeated except that the percentage of the first polyethylene of the first polyolefin was increased to 50%, the percentage of the first polypropylene of the first polyolefin was increased to 50% and the second polyethylene was eliminated and the second polyethylene of the second polyolefin was eliminated.

There was obtained a microporous membrane of polypropylene having the characteristic properties as shown in Tables 1-3B.

### EXAMPLE 8

Example 1 was repeated except that the first polypropylene of the first polyolefin had a Mw of 6.6 x 10⁵ and Mw/Mn of 11.4, and a heat of fusion of 103.3

There was obtained a microporous membrane of polypropylene having the characteristic properties as shown in Tables 1-3B.

### EXAMPLE 9

Example 1 was repeated except that the first polypropylene (PP) had an Mw of 1.4 x 10⁶ and Mw/Mn of 4.5, and a heat of fusion of 106

There was obtained a microporous membrane of polypropylene having the characteristic properties as shown in Tables 1-3B.

### COMPARATIVE EXAMPLE 1

Dry-blended were 99.8 parts by mass of a first polyolefin composition comprising 5% by mass of ultra-high-molecular-weight polyethylene (UHMWPE) having a weight-average molecular weight (Mw) of 2.0 x 10⁶, a molecular weight distribution (Mw/Mn) of 8.0, a melting point (Tₘ) of 135°C, and a crystal dispersion temperature (T_{cd}) of 100°C, 45% by mass of high-density polyethylene (HDPE) having a Mw of 3.0 x 10⁵ and Mw/Mn of 8.6, Tₘ of 135°C, and T_{cd} of 100°C, and 50% by mass of a polypropylene (PP) having a Mw of 1.1 x 10⁶ and Mw/Mn of 5.0, and a heat of fusion of 114, and 0.2 parts by mass of tetrakis [methylene-3 -(3,5-ditertiary-butyl-4-hydroxyphenyI)-propionate] methane as an antioxidant. The polyethylene composition had a Tₘ of 135°C, and T_{cd} of 100°C.

Twenty-five parts by mass of the resultant mixture was charged into a strong-blending double-screw extruder having an inner diameter of 58 mm and L/D of 52.5, and 75 parts by mass of liquid paraffin [50 cst (40°C)] was supplied to the double-screw extruder via a side feeder. Melt-blending was conducted at 210°C and 200 rpm to prepare a first polyolefin solution.

A second polyolefin composition was formed by dry-blending 99.8 parts by mass of a polyolefin composition comprising 20% by mass of ultra-high-molecular-weight polyethylene (UHMWPE) having a weight-average molecular weight (Mw) of 2.0 x 10⁶, a molecular weight distribution (Mw/Mn) of 8.0, a melting point (Tₘ) of 135°C, and a crystal dispersion temperature (T_{cd}) of 100°C, 80% by mass of high-density polyethylene (HDPE) having a Mw of 3.0 x 10⁵ and Mw/Mn of 8.6, Tₘ of 135°C, and T_{cd} of 100°C, and 0.2 parts by mass of tetrakis [methylene-3 -(3,5-ditertiary-butyl-4-hydroxyphenyI)-propionate] methane as an antioxidant. The polyolefin composition had a Mw/Mn of 8.6, a Tₘ of 135°C, and T_{cd} of 100°C.

Thirty parts by mass of the resultant mixture was charged into a second strong-blending double-screw extruder having an inner diameter of 58 mm and L/D of 52.5, and 70 parts by mass of liquid paraffin [50 cst (40°C)] was supplied to the double-screw extruder via a side feeder. Melt-blending was conducted at 210°C and 200 rpm to prepare a second polyolefin solution.

The first and second polyolefin solutions were supplied from their respective double-screw extruders to a multilayer sheet-forming T-die at 210°C, to form a coextrudate. The coextrudate was cooled while passing through cooling rolls controlled at 0°C, to form a gel-like sheet. Using a tenter-stretching machine, the coextruded multilayer gel-like sheet was biaxially stretched at 118.0° C, to 5 fold in both machine and transverse directions.

The stretched coextruded multilayer gel-like sheet was fixed to an aluminum frame of 20 cm x 20 cm, and immersed in a bath of methylene chloride controlled at a temperature of 25° C. to remove the liquid paraffin with a vibration of 100 rpm for 3 minutes. The resulting coextruded multilayer membrane was air-cooled at room temperature. The dried coextruded multilayer membrane was re-stretched by a batch-stretching machine to a magnification of 1.4 fold in a transverse direction at 125°C. The re-stretched coextruded multilayer membrane, which remained fixed to the batch-stretching machine, was heat-set at 125° C. for 10 minutes to produce a microporous polyolefin membrane. The resulting oriented coextruded multilayer membrane was washed with methylene chloride to remove residual liquid paraffin, followed by drying.

There was obtained a microporous membrane of polypropylene having the characteristic properties as shown in Tables 4-6B.

### COMPARATIVE EXAMPLE 2

Example 1 was repeated except that the polyethylene concentration of the second polyolefin was reduced to 30%, and the temperature of the first wet stretch was increased to 115°C.

There was obtained a microporous membrane of polypropylene having the characteristic properties as shown in Tables 4-6B.

### COMPARATIVE EXAMPLE 3

Example 1 was repeated except that the polyethylene concentration of the second polyolefin was reduced to 30%, the temperature of the first wet stretch was increased to 120°C and the temperature of the second wet stretch reduced to 100°CDry-blended were 99.8 parts by mass of a first polyolefin composition comprising 5% by mass of ultra-high-molecular-weight polyethylene (UHMWPE) having a weight-average molecular weight (Mw) of 2.0 x 10⁶, a molecular weight distribution (Mw/Mn) of 8.0, a melting point (Tₘ) of 135°C, and a crystal dispersion temperature (T_{cd}) of 100°C, 45% by mass of high-density polyethylene (HDPE) having a Mw of 3.0 x 10⁵ and Mw/Mn of 8.6, Tₘ of 135°C, and T_{cd} of 100°C, and 50% by mass of a polypropylene (PP) having a Mw of 1.1 x 10⁶ and Mw/Mn of 5.0, and a heat of fusion of 114, and 0.2 parts by mass of tetrakis [methylene-3 -(3,5-ditertiary-butyl-4-hydroxyphenyI)-propionate] methane as an antioxidant. The polyethylene composition had a Tₘ of 135°C, and T_{cd} of 100°C.

Twenty-five parts by mass of the resultant mixture was charged into a strong-blending double-screw extruder having an inner diameter of 58 mm and L/D of 52.5, and 75 parts by mass of liquid paraffin [50 cst (40°C)] was supplied to the double-screw extruder via a side feeder. Melt-blending was conducted at 210°C and 200 rpm to prepare a first polyolefin solution.

A second polyolefin composition was formed by dry-blending 99.8 parts by mass of a polyolefin composition comprising 20% by mass of ultra-high-molecular-weight polyethylene (UHMWPE) having a weight-average molecular weight (Mw) of 2.0 x 10⁶, a molecular weight distribution (Mw/Mn) of 8.0, a melting point (Tₘ) of 135°C, and a crystal dispersion temperature (T_{cd}) of 100°C, 80% by mass of high-density polyethylene (HDPE) having a Mw of 3.0 x 10⁵ and Mw/Mn of 8.6, Tₘ of 135°C, and T_{cd} of 100°C, and 0.2 parts by mass of tetrakis [methylene-3 -(3,5-ditertiary-butyl-4-hydroxyphenyI)-propionate] methane as an antioxidant. The polyolefin composition had a Mw/Mn of 8.6, a Tₘ of 135°C, and T_{cd} of 100°C.

Thirty parts by mass of the resultant mixture was charged into a second strong-blending double-screw extruder having an inner diameter of 58 mm and L/D of 52.5, and 70 parts by mass of liquid paraffin [50 cst (40°C)] was supplied to the double-screw extruder via a side feeder. Melt-blending was conducted at 210°C and 200 rpm to prepare a second polyolefin solution.

The first and second polyolefin solutions were supplied from their respective double-screw extruders to a multilayer sheet-forming T-die at 210°C, to form a coextrudate. The coextrudate was cooled while passing through cooling rolls controlled at 0°C, to form a gel-like sheet. Using a first tenter-stretching machine, the coextruded multilayer gel-like sheet was biaxially stretched at 120.0° C, to 2 fold in both machine and transverse directions. Using a second tenter-stretching machine, the coextruded multilayer gel-like sheet was again biaxially stretched, this time at 100.0° C, to 2.5, fold in both machine and transverse directions.

The stretched coextruded multilayer gel-like sheet was fixed to an aluminum frame of 20 cm x 20 cm, and immersed in a bath of methylene chloride controlled at a temperature of 25° C. to remove the liquid paraffin with a vibration of 100 rpm for 3 minutes. The resulting coextruded multilayer membrane was air-cooled at room temperature. The dried coextruded multilayer membrane was re-stretched by a batch-stretching machine to a magnification of 1.4 fold in a transverse direction at 125°C. The re-stretched coextruded multilayer membrane, which remained fixed to the batch-stretching machine, was heat-set at 125° C. for 10 minutes to produce a microporous polyolefin membrane. The resulting oriented coextruded multilayer membrane was washed with methylene chloride to remove residual liquid paraffin, followed by drying.

There was obtained a microporous membrane of polypropylene having the characteristic properties as shown in Tables 4-6B.

### COMPARATIVE EXAMPLE 4

Example 1 was repeated except that the second polyolefin layer was eliminated, the temperature of the first wet stretch was increased to 118°C and the second wet stretch was eliminated.

There was obtained a microporous membrane of polypropylene having the characteristic properties as shown in Tables 4-6B.

### COMPARATIVE EXAMPLE 5

Example 1 was repeated except that the first polyolefin layer was eliminated, the temperature of the first wet stretch was increased to 115°C and the second wet stretch was eliminated.

There was obtained a microporous membrane of polypropylene having the characteristic properties as shown in Tables 4-6B.

### COMPARATIVE EXAMPLE 6

Example 1 was repeated except for first polyolefin composition comprising 25% by mass of the first polyethylene resin having a weight average molecular weight of 3 x 10⁵ and Mw/Mn of 8.6; and 70% by mass of the polypropylene resin having a weight average molecular weight of 6.6 x 10⁵ , an Mw/Mn of 11.4, and a heat of fusion of 103.3 J/g; and 5% by mass of the second polyethylene resin having a weight average molecular weight of 2 x 10⁶ and Mw/Mn of 8.

There was obtained a microporous membrane of polypropylene having the characteristic properties as shown in Tables 4-6B.

### COMPARATIVE EXAMPLE 7

Example 1 was repeated except that the second polyolefin composition included 20% by mass of a first polyethylene resin having a weight average molecular weight of 3 x 10⁵ and Mw/Mn of 8.6; and 60% by mass of the polypropylene resin having a weight average molecular weight of 6.6 x 10⁵, an Mw/Mn of 11.4, and a heat of fusion of 103.3 J/g; and 20% by mass of the second polyethylene resin having a weight average molecular weight of 2 x 10⁶ and Mw/Mn of 8. The gel-like sheet was broken in stretching.

There was obtained a microporous membrane of polypropylene having the characteristic properties as shown in Tables 4-6B.

### COMPARATIVE EXAMPLE 8

Example 1 was repeated except for first polyolefin composition comprising 50% by mass of a polypropylene resin having a weight average molecular weight of 2.5 x 10⁵, an Mw/Mn of 3.5, and a heat of fusion of 69.2 J/g.

There was obtained a microporous membrane of polypropylene having the characteristic properties as shown in Tables 4-6B.

### COMPARATIVE EXAMPLE 9

Example 1 was repeated except for first polyolefin composition comprising 50% by mass of a polypropylene resin having a weight average molecular weight of 1.6 x 10⁶, an Mw/Mn of 3.2, and a heat of fusion of 78.4 J/g.

There was obtained a microporous membrane of polypropylene having the characteristic properties as shown in Tables 4-6B.

**TABLE 1A**

| POLYOLEFIN BLENDS USED IN EXAMPLES 1-9 | | | | | | | | | | | |
|---|---|---|---|---|---|---|---|---|---|---|---|
| | | | Ex 1 | Ex 2 | Ex 3 | Ex 4 | Ex 5 | Ex 6 | Ex 7 | Ex 8 | Ex 9 |
| First Polyolefin | | | | | | | | | | | |
| | 1st PE | | | | | | | | | | |
| | | Mw | 3.0*10⁵ | 3.0*10⁵ | 3.0*10⁵ | 3.0*10⁵ | 3.0*10⁵ | 3.0*10⁵ | 3.0*10⁵ | 3.0*10⁵ | 3.0*10⁵ |
| | | MWD | 8.6 | 8.6 | 8.6 | 8.6 | 8.6 | 8.6 | 8.6 | 8.6 | 8.6 |
| | | % | 45 | 45 | 45 | 45 | 65 | 50 | 50 | 65 | 45 |
| | | | | | | | | | | | |
| | 2nd PE | | | | | | | | | | |
| | | Mw | 2.0*10⁶ | 2.0*10⁶ | 2.0*10⁶ | 2.0*10⁶ | 2.0*10⁶ | | | 2.0*10⁶ | 2.0*10⁶ |
| | | MWD | 8 | 8 | 8 | 8 | 8 | | | 8 | 8 |
| | | % | 5 | 5 | 5 | 5 | 5 | | | 5 | 5 |
| | | | | | | | | | | | |
| | 1st PP | | | | | | | | | | |
| | | Mw | 1.1*10⁶ | 1.1*10⁶ | 1.1*10⁶ | 1.1*10⁶ | 1.1*10⁶ | 1.1*10⁶ | 1.1*10⁶ | 6.6*10⁵ | 1.40*10⁶ |
| | | MWD | 5.0 | 5.0 | 5.0 | 5.0 | 5.0 | 5.0 | 5.0 | 11.4 | 4.5 |
| | | Heat of fusion | 114 | 114 | 114 | 114 | 114 | 114 | 114 | 103.3 | 106 |
| | | % | 50 | 50 | 50 | 50 | 30 | 50 | 50 | 30 | 50 |
| | | | | | | | | | | | |
| | PE Composition | | | | | | | | | | |
| | | Tₘ | 135 | 135 | 135 | 135 | 135 | 135 | 135 | 135 | 135 |
| | | T_{cd} | 100 | 100 | 100 | 100 | 100 | 100 | 100 | 100 | 100 |
| | PE Concentration | | 25 | 25 | 25 | 25 | 25 | 25 | 25 | 25 | 25 |

**TABLE 1B**

| POLYOLEFIN BLENDS USED IN EXAMPLES 1-9 | | | | | | | | | | | |
|---|---|---|---|---|---|---|---|---|---|---|---|
| | | | Ex 1 | Ex 2 | Ex 3 | Ex 4 | Ex 5 | Ex 6 | Ex 7 | Ex 8 | Ex 9 |
| Second Polyolefin | | | | | | | | | | | |
| | 1st PE | | | | | | | | | | |
| | | Mw | 3.0*10⁵ | 3.0*10⁵ | 3.0*10⁵ | 3.0*10⁵ | 3.0*10⁵ | 3.0*10⁵ | 3.0*10⁵ | 3.0*10⁵ | 3.0*10⁵ |
| | | MWD | 8.6 | 8.6 | 8.6 | 8.6 | 8.6 | 8.6 | 8.6 | 8.6 | 8.6 |
| | | % | 80 | 80 | 80 | 80 | 30 | 80 | 100 | 80 | 80 |
| | | | | | | | | | | | |
| | 2nd PE | | | | | | | | | | |
| | | Mw | 2.0*10⁶ | 2.0*10⁶ | 2.0*10⁶ | 2.0*10⁶ | 2.0*10⁶ | 2.0*10⁶ | | 2.0*10⁶ | 2.0*10⁶ |
| | | MWD | 8 | 8 | 8 | 8 | 8 | 8 | | 8 | 8 |
| | | % | 20 | 20 | 20 | 20 | 20 | 20 | | 20 | 20 |
| | | | | | | | | | | | |
| | 1st PP | | | | | | | | | | |
| | | Mw | | | | | 1.1*10⁶ | | | | |
| | | MWD | | | | | 5.0 | | | | |
| | | Heat of fusion | | | | | 114 | | | | |
| | | % | | | | | 50 | | | | |
| | | | | | | | | | | | |
| | PE Composition | | | | | | | | | | |
| | | Tₘ | 135 | 135 | 135 | 135 | 135 | 135 | 135 | 135 | 135 |
| | | T_{cd} | 100 | 100 | 100 | 100 | 100 | 100 | 100 | 100 | 100 |
| | PE Concentration | | 35 | 35 | 35 | 35 | 35 | 35 | 35 | 35 | 35 |

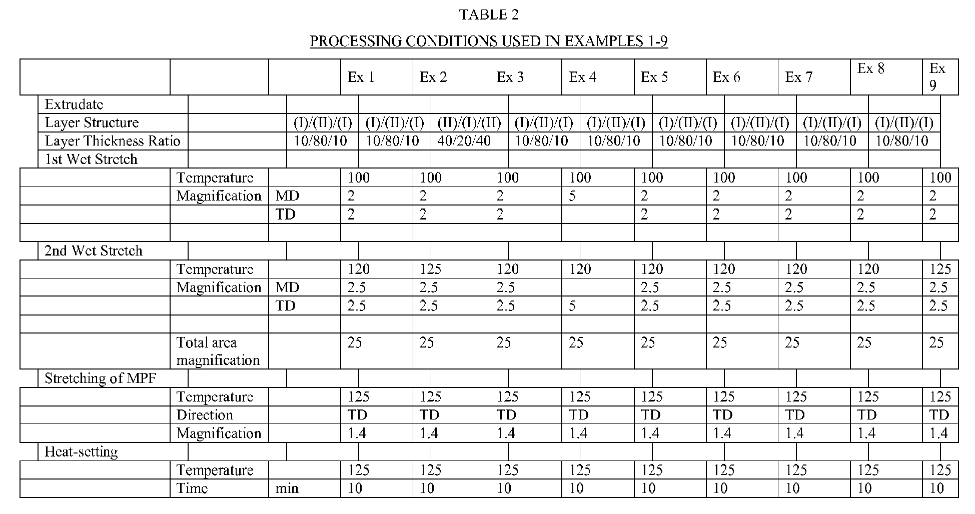

**TABLE 3A**

| PROPERTIES OF SAMPLES PRODUCED IN EXAMPLES 1-9 | | | | | | | | | | | |
|---|---|---|---|---|---|---|---|---|---|---|---|
| Properties of MPF | | | Ex 1 | Ex 2 | Ex 3 | Ex 4 | Ex 5 | Ex 6 | Ex 7 | Ex 8 | Ex 9 |
| | Thickness | micron | 19.8 | 18.6 | 19 | 22.1 | 20.3 | 21.1 | 20.8 | 21.9 | 19.4 |
| | Air Permeability | sec/100cc/20micron | 238 | 190 | 182 | 175 | 335 | 210 | 198 | 170 | 377 |
| | Porosity | % | 52.1 | 52.5 | 51 | 52 | 52.5 | 51.5 | 51.0 | 49 | 53.5 |
| | Puncture Strength | mN/20micron | 5272 | 4508 | 5302 | 5194 | 5214 | 5076 | 4900 | 3489 | 5390 |
| | Tensile Strength | MD, kPa | 107800 | 93100 | 112700 | 110740 | 103880 | 102900 | 99960 | 78400 | 112700 |
| | | TD,kPa | 164640 | 141120 | 166600 | 168560 | 161700 | 156800 | 149940 | 93100 | 166600 |
| | Tensile Elongation | MD, % | 140 | 150 | 145 | 140 | 135 | 135 | 130 | 130 | 145 |
| | | TD, % | 110 | 120 | 110 | 100 | 105 | 104 | 100 | 105 | 120 |
| | Heat Shrinkage | MD, % | 5.4 | 4.9 | 5.5 | 5.6 | 6 | 5 | 4.5 | 4.9 | 6 |
| | | TD, % | 10.4 | 6.5 | 10.5 | 9.5 | 11 | 10 | 9.2 | 8 | 11.2 |
| | Thickness Fluctuation | STDEV | 0.31 | 0.29 | 0.32 | 0.36 | 0.28 | 0.26 | 0.27 | 0.41 | 0.32 |
| | Puncture Strength Fluctuation | STDEV | 5.9 | 6.5 | 5.7 | 6.9 | 6.6 | 5.5 | 5.5 | 7.9 | 5.7 |
| | Electrolytic Solution Absorption speed | vs. CE-5 | 2.8 | 3 | 3.3 | 3.7 | 2.9 | 3.8 | 3.9 | 4.2 | 2.6 |

**TABLE 3B**

| PROPERTIES OF SAMPLES PRODUCED IN EXAMPLES 1-9 | | | | | | | | | | | |
|---|---|---|---|---|---|---|---|---|---|---|---|
| | | | Ex 1 | Ex 2 | Ex 3 | Ex 4 | Ex 5 | Ex 6 | Ex 7 | Ex 8 | Ex 9 |
| | Thickness Variation After Heat Compression | % | -8 | -11 | -7 | -7 | -8 | -10 | -11 | -11 | -8 |
| | Air Permeability After Heat Compression | sec/100cc | 584 | 495 | 524 | 480 | 697 | 545 | 520 | 472 | 885 |
| | MD Temp. | °C | 178 | 178 | 178 | 178 | 179 | 178 | 178 | 163 | 180 |
| | Max Shrinkage(TMA) | % | 19.5 | 12.9 | 18.8 | 20.5 | 22.5 | 18.0 | 17.0 | 16.0 | 22.5 |
| | Capacity Recovery Ratio of Battery | % | 81 | 81 | 80 | 81 | 79 | 81 | 82 | 79 | 82 |

**TABLE 4A**

| POLYOLEFIN BLENDS USED IN COMPARATIVE EXAMPLES 1-9 | | | | | | | | | | | |
|---|---|---|---|---|---|---|---|---|---|---|---|
| | | | CE 1 | CE 2 | CE 3 | CE 4 | CE 5 | CE 6 | CE 7 | CE 8 | CE 9 |
| First Polyolefin | | | | | | | | | | | |
| | 1st PE | Mw | 3.0*10⁵ | 3.0*10⁵ | 3.0*10⁵ | 3.0*10⁵ | | 3.0*10⁵ | 3.0*10⁵ | 3.0*10⁵ | 3.0*10⁵ |
| | | MWD | 8.6 | 8.6 | 8.6 | 8.6 | | 8.6 | 8.6 | 8.6 | 8.6 |
| | | % | 45 | 45 | 45 | 45 | | 25 | 45 | 45 | 45 |
| | 2nd PE | Mw | 2.0*10⁶ | 2.0*10⁶ | 2.0*10⁶ | 2.0*10⁶ | | 2.0*10⁶ | 2.0*10⁶ | 2.0*10⁶ | 2.0*10⁶ |
| | | MWD | 8 | 8 | 8 | 8 | | 8 | 8 | 8 | 8 |
| | | % | 5 | 5 | 5 | 5 | | 5 | 5 | 5 | 5 |
| | 1st PP | Mw | 1.1*10⁶ | 1.1*10⁶ | 1.1*10⁶ | 1.1*10⁶ | | 1.1*10⁶ | 1.1*10⁶ | 2.5*10⁵ | 1.6*10⁶ |
| | | MWD | 5.0 | 5.0 | 5.0 | 5.0 | | 5.0 | 5.0 | 3.5 | 3.2 |
| | | Heat of fusion | 114 | 114 | 114 | 114 | | 114 | 114 | 69 | 78.4 |
| | | % | 50 | 50 | 50 | 50 | | 70 | 50 | 50 | 50 |
| | PE Composition | Tₘ | 135 | 135 | 135 | 135 | | 135 | 135 | 135 | 135 |
| | | T_{cd} | 100 | 100 | 100 | 100 | | 100 | 100 | 100 | 100 |
| | PE Concentration | | 25 | 25 | 25 | 25 | | 25 | 25 | 25 | 25 |

**TABLE 4B**

| POLYOLEFIN BLENDS USED IN COMPARATIVE EXAMPLES 1-9 | | | | | | | | | | |
|---|---|---|---|---|---|---|---|---|---|---|
| | | CE 1 | CE 2 | CE 3 | CE 4 | CE 5 | CE 6 | CE 7 | CE 8 | CE 9 |
| Second Polyolefin | | | | | | | | | | |
| 1st PE | Mw | 3.0*10⁵ | 3.0*10⁵ | 3.0*10⁵ | | 3.0*10⁵ | 3.0*10⁵ | 3.0*10⁵ | 3.0*10⁵ | 3.0*10⁵ |
| | MWD | 8.6 | 8.6 | 8.6 | | 8.6 | 8.6 | 8.6 | 8.6 | 8.6 |
| | % | 80 | 80 | 80 | | 80 | 80 | 20 | 80 | 80 |
| 2nd PE | Mw | 2.0*10⁶ | 2.0*10⁶ | 2.0*10⁶ | | 2.0*10⁶ | 2.0*10⁶ | 2.0*10⁶ | 2.0*10⁶ | 2.0*10⁶ |
| | MWD | 8 | 8 | 8 | | 8 | 8 | 8 | 8 | 8 |
| | % | 20 | 20 | 20 | | 20 | 20 | 20 | 20 | 20 |
| 1st PP | Mw | | | | | | | 1.1*10⁶ | | |
| | MWD | | | | | | | 5.0 | | |
| | Heat of fusion | | | | | | | 114 | | |
| | % | | | | | | | 60 | | |
| PE Composition | Tₘ | 135 | 135 | 135 | | 135 | 135 | 135 | 135 | 135 |
| | T_{cd} | 100 | 100 | 100 | | 100 | 100 | 100 | 100 | 100 |
| PE Concentration | | 35 | 35 | 35 | | 30 | 35 | 35 | 35 | 35 |

**TABLE 5**

| PROCESSING CONDITIONS USED IN COMPARATIVE EXAMPLES 1-9 | | | | | | | | | | | |
|---|---|---|---|---|---|---|---|---|---|---|---|
| | | | CE 1 | CE 2 | CE 3 | CE 4 | CE 5 | CE 6 | CE 7 | CE 8 | CE 9 |
| Extrudate | | | | | | | | | | | |
| Layer Structure | | | (I)/(II)/(I) | (I)/(II)/(I) | (I)/(II)/(I) | (I) | (II) | (I)/(II)/(I) | (I)/(II)/(I) | (I)/(II)/(I) | (I)/(II)/(I) |
| Layer Thickness Ratio | | | 10/80/10 | 10/80/10 | 10/80/10 | 100 | 100 | 10/80/10 | 10/80/10 | 10/80/10 | 10/80/10 |
| 1st Wet Stretch | | | | | | | | | | | |
| Temperature | | °C | 118 | 115 | 120 | 118 | 115 | 100 | 100 | 100 | 100 |
| Magnification | | MD | 5 | 2 | 2 | 5 | 5 | 2 | 2 | 2 | 2 |
| | | TD | 5 | 2 | 2 | 5 | 5 | 2 | 2 | 2 | 2 |
| | | | | | | | | | | | |
| 2nd Wet Stretch | | | | | | | | | | | |
| Temperature | | °C | | 120 | 100 | | | 120 | 120 | 120 | 120 |
| Magnification | | MD | | 2.5 | 2.5 | | | 2.5 | 2.5 | 2.5 | 2.5 |
| | | TD | | 2.5 | 2.5 | | | 2.5 | 2.5 | 2.5 | 2.5 |
| | | | | | | | | | | | |
| Total area magnification | | | 25 | 25 | 25 | 25 | 25 | 25 | 25 | 25 | 25 |
| Stretching of MPF | | | | | | | | | | | |
| Temperature | | °C | 125 | 125 | 125 | 125 | | 125 | | 125 | 125 |
| Direction | | | TD | TD | TD | TD | | TD | | TD | TD |
| Magnification | | | 1.4 | 1.4 | 1.4 | 1.4 | | 1.4 | | 1.4 | 1.4 |
| Heat-setting | | | | | | | | | | | |
| | Temperature | °C | 125 | 125 | 125 | 125 | 127 | 125 | | 125 | 125 |
| | Time | min | 10 | 10 | 10 | 10 | 10 | 10 | | 10 | 10 |

**TABLE 6A**

| PROPERTIES OF SAMPLES PRODUCED IN COMPARATIVE EXAMPLES 1-9 | | | | | | | | | | | |
|---|---|---|---|---|---|---|---|---|---|---|---|
| Properties of MPF | | | CE 1 | CE 2 | CE 3 | CE 4 | CE 5 | CE 6 | CE 7 | CE 8 | CE 9 |
| | Thickness | micron | 19.5 | 22 | 20.9 | 20 | 20.1 | 19.4 | | 20.3 | 19.9 |
| | Air Permeability | sec/100cc/20micron | 265 | 250 | 270 | 304 | 490 | 455 | | 305 | 340 |
| | Porosity | % | 52 | 52 | 51 | 44 | 38 | 53.5 | | 52.3 | 50.4 |
| | Puncture Strength | mN/20micron | 3724 | 4018 | 4165 | 4410 | 4606 | 5292 | | 4998 | 5390 |
| | Tensile strength | MD, kPa | 98980 | 102900 | 107800 | 117600 | 145980 | 109760 | | 107800 | 109760 |
| | | TD,kPa | 116620 | 117600 | 122500 | 156800 | 121970 | 162680 | | 121970 | 164640 |
| | Tensile Elongation | MD, % | 160 | 155 | 150 | 150 | 145 | 150 | | 130 | 150 |
| | | TD, % | 125 | 120 | 115 | 115 | 220 | 125 | | 110 | 110 |
| | Heat Shrinkage | MD, % | 4.2 | 4.9 | 6.9 | 3.5 | 6 | 6.5 | | 5.5 | 6.3 |
| | | TD, % | 6.9 | 9.9 | 12 | 4.2 | 5.5 | 11.5 | | 8.9 | 12.1 |
| | Thickness Fluctuation | STDEV | | 1.08 | 1.13 | 1.19 | 0.30 | 1.24 | | 1.52 | 1.34 |
| | Puncture Strength Fluctuation | STDEV | 11.6 | 11.1 | 12.0 | 14.1 | 5.2 | 14.9 | | 18.9 | 16.1 |
| | Electrolytic Solution Absorption Speed | vs. CE-5 | 3.8 | 2.5 | 2 | 3.5 | 1 | 2.5 | | 2.7 | 3.7 |

**TABLE 6B**

| PROPERTIES OF SAMPLES PRODUCED IN COMPARATIVE EXAMPLES 1-9 | | | | | | | | | | | |
|---|---|---|---|---|---|---|---|---|---|---|---|
| | | | CE 1 | CE 2 | CE 3 | CE 4 | CE 5 | CE 6 | CE 7 | CE 8 | CE 9 |
| | Thickness Variation After Heat Compression | % | -10 | -10 | -8 | -8 | -20 | -11 | | -19 | -11 |
| | Air Permeability After Heat Compression | sec/100cc | 500 | 580 | 635 | 620 | 970 | 511 | | 780 | 730 |
| | MD Temp. | °C | 179 | 179 | 179 | 176 | 146 | 181 | | 153 | 165 |
| | Max Shrinkage(TMA) | % | 13.5 | 14.5 | 23.0 | 16.0 | 32.0 | 24.5 | | 21.3 | 24.1 |
| | Capacity Recovery Ratio of Battery | % | 79 | 79 | 79 | 79 | 65 | 81 | | 74 | 77 |

All patents, test procedures, and other documents cited herein, including priority documents, are fully incorporated by reference to the extent such disclosure is not inconsistent and for all jurisdictions in which such incorporation is permitted.

While the illustrative forms disclosed herein have been described with particularity, it will be understood that various other modifications will be apparent to and can be readily made by those skilled in the art without departing from the spirit and scope of the disclosure. Accordingly, it is not intended that the scope of the claims appended hereto be limited to the examples and descriptions set forth herein but rather that the claims be construed as encompassing all the features of patentable novelty which reside herein, including all features which would be treated as equivalents thereof by those skilled in the art to which this disclosure pertains.

When numerical lower limits and numerical upper limits are listed herein, ranges from any lower limit to any upper limit are contemplated.

The invention can be further described in the following non-limiting embodiments.
1. A process for producing a coextruded multilayer microporous membrane, comprising the steps of:
   (a) combining a first polyolefin composition and a solvent or diluent to prepare a first polyolefin solution, the polyolefin composition comprising at least a first polyethylene having a crystal dispersion temperature (T_{cd}) and polypropylene;
   (b) combining a second polyolefin composition and a solvent to prepare a second polyolefin solution, the second polyolefin composition comprising at least a first polyethylene having a crystal dispersion temperature (T_{cd}) and optionally polypropylene;
   (b) extruding the first polyolefin solution and the second polyolefin solution to form a first extrudate and a second extrudate;
   (c) cooling each extrudate to form a first cooled extrudate and a second cooled extrudate;
   (d) orienting each cooled extrudate in at least a first direction by about one to about ten fold at a temperature of about T_{cd} +/- 15° C..; and
   (e) further orienting each cooled extrudate in at least a second direction by about one to about five fold at a temperature about 10° C. to about 40° C. higher than the temperature employed in step (d).
2. The process of embodiment 1, further comprising the steps of:
   (f) removing at least a portion of the solvent from each cooled extrudate to form a first membrane and a second membrane;
   (g) optionally orienting each membrane to a magnification of from about 1.1 to about 2.5 fold in at least one direction; and
   (h) heat-setting each membrane.
3. The process of embodiment 1 or 2, wherein the first cooled extrudate is laminated to the second cooled extrudate at any step following step (c).
4. The process of any of embodiments 1 through 3, wherein said step of extruding the first polyolefin solution and the second polyolefin solution utilizes a coextrusion die to form a coextrudate.
5. The process of any of embodiments 1 through 4, wherein said step of orienting each cooled extrudate in at least a machine direction utilizes a roll-type stretching machine.
6. The process of any of embodiments 1 through 5, wherein said step of orienting each cooled extrudate in at least the first direction utilizes a tenter-type stretching machine.
7. The process of any of embodiments 1 through 6, wherein said step of further orienting each cooled extrudate in at least a second direction utilizes a tenter-type stretching machine.
8. The process of any of embodiments 1 through 7, wherein the first and second polyolefin compositions each comprise a high density polyethylene and polypropylene.
9. The process of any of embodiments 1 through 8, wherein the first and second polyolefin compositions each further comprise an ultra high molecular weight polyethylene.
10. A microporous membrane made by the process of any of embodiments 1 through 9.
11. A battery comprising the microporous membrane of embodiment 10.
12. Using the battery of embodiment 11 as a source or sink of electric charge.

## Claims

1. A process for producing a coextruded multilayer microporous membrane, comprising the steps of:
(a) combining a first polyolefin composition and a solvent or diluent to prepare a first polyolefin solution, the polyolefin composition comprising at least a first polyethylene having a crystal dispersion temperature (T_{cd}) and polypropylene;
(b) combining a second polyolefin composition and a solvent to prepare a second polyolefin solution, the second polyolefin composition comprising at least a first polyethylene having a crystal dispersion temperature (T_{cd}) and optionally polypropylene;
(b) extruding the first polyolefin solution and the second polyolefin solution to form a first extrudate and a second extrudate;
(c) cooling each extrudate to form a first cooled extrudate and a second cooled extrudate;
(d) orienting each cooled extrudate in at least a first direction by about one to about ten fold at a temperature of about T_{cd} +/- 15° C..; and
(e) further orienting each cooled extrudate in at least a second direction by about one to about five fold at a temperature about 10° C. to about 40° C. higher than the temperature employed in step (d).

2. The process of claim 1, further comprising the steps of:
(f) removing at least a portion of the solvent from each cooled extrudate to form a first membrane and a second membrane;
(g) optionally orienting each membrane to a magnification of from about 1.1 to about 2.5 fold in at least one direction; and
(h) heat-setting each membrane.

3. The process of claim 2, wherein the first cooled extrudate is laminated to the second cooled extrudate at any step following step (c).

4. The process of claim 2, wherein said step of extruding the first polyolefin solution and the second polyolefin solution utilizes a coextrusion die to form a coextrudate.

5. The process of claim 1, wherein said step of orienting each cooled extrudate in at least a machine direction utilizes a roll-type stretching machine.

6. The process of claim 1, wherein said step of orienting each cooled extrudate in at least the first direction utilizes a tenter-type stretching machine.

7. The process of claim 1, wherein said step of further orienting each cooled extrudate in at least a second direction utilizes a tenter-type stretching machine.

8. The process of claim 1, wherein the first and second polyolefin compositions each comprise a high density polyethylene and polypropylene.

9. The process of claim 8, wherein the first and second polyolefin compositions each further comprise an ultra high molecular weight polyethylene.

10. The process of claim 8, wherein the first and second polyolefin compositions each comprise at least about 30 wt. % high density polyethylene and at least about 30 wt. % polypropylene.
